Europäisches Patentamt

**European Patent Office**

**Office européen des brevets**

(19)

(11) **EP 1 005 271 B1**

(12) **EUROPÄISCHE PATENTSCHRIFT**

(45) Veröffentlichungstag und Bekanntmachung des Hinweises auf die Patenterteilung:
**06.11.2002 Patentblatt 2002/45**

(21) Anmeldenummer: **98946397.1**

(22) Anmeldetag: **20.08.1998**

(51) Int Cl.$^7$: **A01N 43/80**

(86) Internationale Anmeldenummer:
**PCT/EP98/05310**

(87) Internationale Veröffentlichungsnummer:
**WO 99/008530 (25.02.1999 Gazette 1999/08)**

(54) **SYNERGISTISCHE BIOZIDZUSAMMENSETZUNG**

SYNERGISTIC BIOCIDE COMPOSITION

COMPOSITION BIOCIDE SYNERGIQUE

(84) Benannte Vertragsstaaten:
**AT CH DE DK ES FI FR GB IT LI NL PT SE**

(30) Priorität: **20.08.1997 EP 97114397**

(43) Veröffentlichungstag der Anmeldung:
**07.06.2000 Patentblatt 2000/23**

(73) Patentinhaber: **THOR GmbH**
**67346 Speyer (DE)**

(72) Erfinder:
• **ANTONI-ZIMMERMANN, Dagmar**
**D-67346 Speyer (DE)**
• **BAUM, Rüdiger**
**D-68753 Waghäusel (DE)**
• **WUNDER, Thomas**
**D-67435 Neustadt (DE)**
• **SCHMIDT, Hans-Jürgen**
**D-67346 Speyer (DE)**

(74) Vertreter: **Hiltl, Elmar, Dr. et al**
**DIEHL.GLAESER.HILTL & PARTNER,**
**Patentanwälte,**
**Augustenstrasse 46**
**80333 München (DE)**

(56) Entgegenhaltungen:
**EP-A- 0 363 011        EP-A- 0 676 140**

• **CHEMICAL ABSTRACTS, vol. 121, no. 11, 12. September 1994 Columbus, Ohio, US; abstract no. 127844, A. WAKABAYASHI & S. PPONMA: "Stable liquid bactericides and fungicides containing isothiazolones and propanols" XP002056109 in der Anmeldung erwähnt & JP 06 092806 A (HOKKO CHEM. IND. CO.) 5. April 1994**
• **DATABASE WPI Section Ch, Week 8942 Derwent Publications Ltd., London, GB; Class D22, AN 89-304342 XP002086210 & JP 01 224306 A (UMEKAWA O) , 7. September 1989 in der Anmeldung erwähnt**

## Beschreibung

Die Erfindung betrifft eine Biozidzusammensetzung als Zusatz zu Stoffen, die von schädlichen Mikroorganismen befallen werden können. Insbesondere richtet sich die Erfindung auf eine Biozidzusammensetzung mit mindestens zwei bioziden Wirkstoffen, die synergistisch zusammenwirken, wobei einer der Wirkstoffe 2-Methylisothiazolin-3-on ist.

Biozide Mittel werden in vielen Bereichen eingesetzt, beispielsweise zur Bekämpfung von schädlichen Bakterien, Pilzen oder Algen. Es ist seit langem bekannt, in solchen Zusammensetzungen 4-Isothiazolin-3-one (die auch als 3-Isothiazolone bezeichnet werden) einzusetzen, da sich unter diesen sehr wirksame biozide Verbindungen befinden.

Eine dieser Verbindungen ist 5-Chlor-2-methylisothiazolin-3-on. Sie weist zwar eine gute biozide Wirkung auf, hat aber bei ihrer praktischen Handhabung verschiedene Nachteile. Beispielsweise löst die Verbindung bei Personen, die damit umgehen, häufig Allergien aus. Auch bestehen in manchen Ländern gesetzliche Beschränkungen für den AOX-Wert von Industrieabwässern, d. h. es darf im Wasser eine bestimmte Konzentration von an Aktivkohle adsorbierbaren organischen Chlor-, Bromund Iodverbindungen nicht überschritten werden. Dies verhindert dann den Einsatz von 5-Chlor-2-methylisothiazolin-3-on im gewünschten Umfang. Ferner ist die Stabilität dieser Verbindung unter bestimmten Bedingungen, z.B. bei hohen pH-Werten oder in Anwesenheit von Nucleophilen oder Reduktionsmitteln, nicht ausreichend.

Ein weiteres bekanntes Isothiazolin-3-on mit biozider Wirkung ist 2-Methylisothiazolin-3-on. Die Verbindung vermeidet zwar verschiedene Nachteile von 5-Chlor-2-methylisothiazolin-3-on, beispielsweise das hohe Allergierisiko, hat aber eine wesentlich geringere biozide Wirkung. Ein einfacher Austausch von 5-Chlor-2-methylisothiazolin-3-on durch 2-Methylisothiazolin-3-on ist daher nicht möglich.

Es ist auch schon bekannt, Kombinationen aus verschiedenen Isothiazolin-3-onen oder Kombinationen aus mindestens einem Isothiazolin-3-on und anderen Verbindungen zu benutzen. Beispielsweise ist in der EP 0676140 A1 eine synergistische biozide Zusammensetzung beschrieben, die 2-Methylisothiazolin-3-on (2-Methyl-3-isothiazolon) und 2-n-Octylisothiazolin-3-on (2-n-Octyl-3-isothiazolon) enthält.

Aus der US 5328926 sind synergistische Biozidzusammensetzungen bekannt, die Kombinationen aus 1,2-Benzisothiazolin-3-on und einer Iodpropargylverbindung (Iodpropinylverbindung) sind. Als eine solche Verbindung ist beispielsweise 3-Iodpropargyl-N-butylcarbamat genannt. In der Druckschrift sind aber keine Biozidzusammensetzungen beschrieben, die außer 1,2-Benzisothiazolin-3-on und 3-Iodpropargyl-N-butylcarbamat noch weitere biozide Wirkstoffe enthalten.

In der JP 01224306 (Chemical Abstracts, Band 112, Nr. 11, 12. März 1990, Referat Nr. 93924) ist eine Biozidzusammensetzung beschrieben, die aus 2-Methylisothiazolin-3-on, 1,2-Benzisothiazolin-3-on und 5-Chlor-2-methylisothiazolin-3-on besteht.

Die JP 06092806 (Chemical Abstracts, Band 121, Nr. 11, 12. September 1994, Referat Nr. 127844) bezieht sich auf Biozidzusammensetzungen, die ein Isothiazolinon, 1,2-Benzisothiazolin-3-on und Propanol oder ein Propanolderivat enthalten. Als Isothiazolinon ist beispielsweise 2-Methylisothiazolin-3-on und als Propanolderivat beispielsweise 2-Brom-2-nitropropan-1,3-diol genannt. Es wird aber kein Hinweis auf eine Zusammensetzung gegeben, die speziell 2-Methylisothiazolin-3-on, 1,2-Benzisothiazolin-3-on und 2-Brom-2-nitropropan-1,3-diol enthält und gleichzeitig frei von 5-Chlor-2-methylisothiazolin-3-on ist.

Der Erfindung liegt die Aufgabe zugrunde, eine Biozidzusammensetzung anzugeben, die dadurch verbessert ist, daß ihre Komponenten synergistisch zusammenwirken und deshalb beim gleichzeitigen Einsatz in geringeren Konzentrationen verwendet werden können, verglichen mit den nötigen Konzentrationen im Falle der Einzelkomponenten. So sollen der Mensch und die Umwelt weniger belastet sowie die Kosten der Bekämpfung schädlicher Mikroorganismen gesenkt werden.

Diese Aufgabe löst die Erfindung durch eine Biozidzusammensetzung mit mindestens zwei bioziden Wirkstoffen, von denen einer 2-Methylisothiazolin-3-on ist. Die Zusammensetzung ist dadurch gekennzeichnet, daß sie als einen weiteren bioziden Wirkstoff 1,2-Benzisothiazolin-3-on enthält, wobei Biozidzusammensetzungen mit einem Gehalt an 5-Chlor-2-methylisothiazolin-3-on ausgenommen sind.

Die erfindungsgemäße Biozidzusammensetzung hat den Vorteil, daß sie bisher in der Praxis benutzte, aber mit Nachteilen bezüglich Gesundheit und Umwelt behaftete Wirkstoffe, z. B. das 5-Chlor-2-methylisothiazolin-3-on, ersetzen kann. Außerdem kann die erfindungsgemäße Biozidzusammensetzung bei Bedarf nur mit Wasser als günstigem Medium hergestellt werden. Dabei ist der Zusatz von Emulgatoren, organischen Lösungsmitteln und/oder Stabilisatoren nicht notwendig. Ferner ermöglicht es die Erfindung, durch den Zusatz weiterer Wirkstoffe, die Zusammensetzung speziellen Zielen anzupassen, beispielsweise im Sinne einer erhöhten bioziden Wirkung, eines verbesserten Langzeitschutzes der von Mikroorganismen befallenen Stoffe, einer verbesserten Verträglichkeit mit den zu schützenden Stoffen oder eines verbesserten toxikologischen oder ökotoxikologischen Verhaltens.

Die erfindungsgemäße Biozidzusammensetzung enthält das 2-Methylisothiazolin-3-on und das 1,2-Benzisothiazolin-3-on normalerweise im Gewichtsverhältnis von (50-1):(1-50), vorzugsweise im Gewichtsverhältnis von (15-1):(1-8), insbesondere im Gewichtsverhältnis von (4-1):(1-4). Ganz besonders bevorzugt ist ein Gewichtsverhältnis von 1:1.

In der Biodzidzusammensetzung liegen das 2-Methylisothiazolin-3-on und das 1,2-Benzisothiazolin-3-on in einer Gesamtkonzentration von vorzugsweise 0,5 bis 50 Gew%, insbesondere von 1 bis 20 Gew%, besonders bevorzugt von 2,5 bis 10 Gew%, jeweils bezogen auf die gesamte Biozidzusammensetzung, vor.

Es ist zweckmäßig, die Biozide der erfindungsgemäßen Zusammensetzung in Kombination mit einem polaren oder unpolaren flüssigen Medium einzusetzen. Dabei kann dieses Medium beispielsweise in der Biozidzusammensetzung und/oder in dem zu konservierenden Stoff vorgegeben sein.

Bevorzugte polare flüssige Medien sind Wasser, ein aliphatischer Alkohol mit 1 bis 4 Kohlenstoffatomen, z. B. Ethanol und Isopropanol, ein Glykol, z.B. Ethylenglykol, Diethylenglykol, 1,2-Propylenglykol, Dipropylenglykol und Tripropylenglykol, ein Glykolether, z.B. Butylglykol und Butyldiglykol, ein Glykolester, z.B. Butyldiglykolacetat oder 2,2,4-Trimethylpentandiolmonoisobutyrat, ein Polyethylenglykol, ein Polypropylenglykol, N,N-Dimethylformamid oder ein Gemisch aus solchen Stoffen. Das polare flüssige Medium ist insbesondere Wasser, wobei die entsprechende Biozidzusammensetzung in ihrem pH-Wert vorzugsweise neutral oder schwach alkalisch, beispielsweise auf einen pH-Wert von 7 bis 9, eingestellt ist. Dabei liegt dann das 2-Methylisothiazolin-3-on in gelöster Form und das l,2-Benzisothiazolin-3-on in feindisperser Form vor oder es sind beide Wirkstoffe gelöst.

Als unpolare flüssige Medien dienen z. B. Aromaten, Vorzugsweise Xylol und Toluol.

Die erfindungsgemäße Biozidzusammensetzung kann auch gleichzeitig mit einem polaren und einem unpolaren flüssigen Medium kombiniert werden.

Die erfindungsgemäße Biozidzusammensetzung kann zusätzlich zu 2-Methylisothiazolin-3-on und 1,2-Benzisothiazolin-3-on noch einen oder mehrere weitere biozide Wirkstoffe enthalten, die in Abhängigkeit vom Anwendungsgebiet ausgewählt werden. Spezielle Beispiele für solche zusätzliche bioziden Wirkstoffe sind nachfolgend angegeben.

Benzylalkohol
2,4-Dichlorbenzylalkohol
2-Phenoxyethanol
2-Phenoxyethanolhemiformal
Phenylethylalkohol
5-Brom-5-nitro-1,3-dioxan
Formaldehyd und Formaldehyd-Depotstoffe
Dimethyloldimethylhydantoin
Glyoxal
Glutardialdehyd
Sorbinsäure
Benzoesäure
Salicylsäure
p-Hydroxybenzoesäureester
Chloracetamid
N-Methylolchloracetamid
Phenole, wie p-Chlor-m-kresol und o-Phenylphenol
N-Methylolharnstoff,
N,N'-Dimethylolharnstoff
Benzylformal
4,4-Dimethyl-1,3-oxazolidin
1,3,5-Hexahydrotriazinderivate
Quartäre Ammoniumverbindungen, wie
    N-Alkyl-N,N-dimethylbenzylammoniumchlorid und
    Di-n-decyldimethylammoniumchlord
Cetylpyridiniumchlorid
Diguanidin
Polybiguanid
Chlorhexidin
1,2-Dibrom-2,4-dicyanobutan
3,5-Dichlor-4-hydroxybenzaldehyd
Ethylenglykolhemiformal
Tetra-(hydroxymethyl)-phosphoniumsalze

Dichlorophen
2,2-Dibrom-3-nitrilopropionsäureamid
3-Iod-2-propinyl-N-butylcarbamat
Methyl-N-benzimidazol -2 -ylcarbamat
2-n-Octylisothiazolin-3-on
4,5-Dichlor-2-n-octylisothiazolin-3-on
4,5-Trimethylen-2-methylisothiazolin-3-on
2,2'-Dithio-dibenzoesäure-di-N-methylamid
Benzisothiazolinonderivate
2-Thiocyanomethylthiobenzthiazol
C-Formale, wie
    2-Hydroxymethyl-2-nitro-1,3-propandiol
    2-Brom-2-nitropropan-1, 3-diol
Methylenbisthiocyanat
Umsetzungsprodukte von Allantoin

Als solche weiteren bioziden Wirkstoffe sind 3-Iod-2-propinyl-N-butylcarbamat, 2-n-Octylisothiazolin-3-on, Formaldehyd oder ein Formaldehyd-Depotstoff sowie 2-Brom-2-nitropropan-1,3-diol bevorzugt.

Beispiele für den Formaldehyd-Depotstoff sind

N-Formale, wie

N,N'-Dimethylolharnstoff
N-Methylolharnstoff
Dimethyloldimethylhydantoin
N-Methylolchloracetamid
Umsetzungsprodukte von Allantoin

Glykolformale, wie

Ethylenglykolformal
Butyldiglykolformal

Benzylformal

Die erfindungsgemäße Biozidzusammensetzung kann daneben noch andere übliche Bestandteile enthalten, die dem Fachmann auf dem Gebiet der Biozide als Zusatzstoffe bekannt sind. Es sind dies z.B. Verdickungsmittel, Entschäumer, Stoffe zur Einstellung des pH-Werts, Duftstoffe, Dispergierhilfsmittel und färbende Stoffe.

Das 2-Methylisothiazolin-3-on und das 1,2-Benzisothiazolin-3-on sind bekannte Stoffe. Das 2-Methylisothiazolin-3-on kann beispielsweise gemäß der US 5466818 hergestellt werden. Das dabei erhaltene Reaktionsprodukt läßt sich z.B. durch Säulenchromatographie reinigen.

Das 1,2-Benzisothiazolin-3-on ist im Handel erhältlich, beispielsweise unter dem Handelsnamen Acticide® BW 20 und Acticide® BIT von der Fa. Thor Chemie GmbH.

Das 3-Iod-2-propinyl-N-butylcarbamat ist gleichfalls im Handel erhältlich, beispielsweise von der Fa. Troy Chemical Company unter den Handelsnamen Polyphase®, Polyphase® AF-1 und Polyphase® NP-1, oder von der Fa. Olin Corporation unter dem Handelsnamen Omacide® IPBC 100.

Auch das 2-n-Octylisothiazolin-3-on ist im Handel erhältlich, beispielsweise von der Fa. Thor Chemie GmbH unter dem Handelsnamen Acticide® OIT.

Schließlich ist das 2-Brom-2-nitropropan-1,3-diol im Handel erhältlich, beispielsweise von der Fa. Boots unter dem Handelsnamen Myacide® AS.

Bei der erfindungsgemäßen Biozidzusammensetzung gemäß einer ersten Ausführungsform der Erfindung handelt es sich um ein System, bei dem die Kombination aus 2-Methylisothiazolin-3-on und 1,2-Benzisothiazolin-3-on synergistisch eine biozide Wirkung entfaltet, die größer ist als jene, die jede dieser Verbindungen allein aufweist.

Auch soweit die erfindungsgemäße Biozidzusammensetzung gemäß weiteren Ausführungsformen der Erfindung neben der Zweierkombination aus 2-Methylisothiazolin-3-on und 1,2-Benzisothiazolin-3-on zusätzlich einen der weiteren bioziden Wirkstoffe 3-Iod-2-propinyl-N-butylcarbamat, 2-n-Octylisothiazolin-3-on, Formaldehyd oder Formaldehyd-Depotstoff oder 2-Brom-2-nitropropan-1,3-diol enthält, wird eine synergistische biozide Wirkung erzielt, die größer ist als jene, welche die vorgenannte Zweierkombination und jeder dieser weiteren Wirkstoffe allein aufweist.

Wenn die Zweierkombination zusammen mit einem der vorgenannten weiteren bioziden Wirkstoffe eingesetzt wird, enthält sie das 2-Methylisothiazolin-3-on und das 1,2-Benzisothiazolin-3-on vorzugsweise im Gewichtsverhältnis 1:1. Es kann aber auch jedes andere Gewichtsverhältnis gewählt werden, soweit dabei eine synergistische Wirkung erzielt wird.

Die erfindungsgemäße Biozidzusammensetzung kann auf sehr unterschiedlichen Gebieten eingesetzt werden. Sie eignet sich beispielsweise für den Einsatz in Anstrichmitteln, Putzen, Ligninsulfonaten, Kreideaufschlämmungen, Klebstoffen, Photochemikalien, caseinhaltigen Produkten, stärkehaltigen Produkten, Bitumenemulsionen, Tensidlösungen, Kraftstoffen, Reinigungsmitteln, kosmetischen Produkten, Wasserkreisläufen, Polymerdispersionen und Kühlschmierstoffen gegen den Befall durch beispielsweise Bakterien, filamentöse Pilze, Hefen und Algen.

Bei der praktischen Anwendung kann die Biozidzusammensetzung entweder als fertiges Gemisch oder durch getrennte Zugabe der Biozide und der übrigen Komponenten der Zusammensetzung in den zu konservierenden Stoff eingebracht werden.

Die Beispiele erläutern die Erfindung.

In allen Beispielen, in denen ein Wirkstoffgemisch aus MIT und BIT sowie zusätzlich ein weiterer biozider Wirkstoff eingesetzt wurde, betrug das Gewichtsverhältnis von MIT zu BIT 1:1.

Beispiel 1

Mit diesem Beispiel wird der Synergismus der beiden wesentlichen Wirkstoffe in der erfindungsgemäßen Biozidzusammensetzung aufgezeigt.

Dazu wurden wäßrige Gemische mit unterschiedlichen Konzentrationen an 2-Methylisothiazolin-3-on (MIT) und 1,2-Benzisothiazolin-3-on (BIT) hergestellt und die Wirkung dieser Gemische auf Escherichia coli (International Mycological Institute, Stammnummer IMI 362054) geprüft.

Die wäßrigen Gemische enthielten außer der Biozidkomponente und Wasser noch ein Nährmedium, nämlich eine Müller-Hinton-Bouillon (Handelsprodukt "Merck Nr. 10393"). Die Zelldichte von Escherichia coli lag bei $10^6$ Keime/ml. Die Inkubationszeit betrug 72 h bei 25°C. Jede Probe wurde mit 120 U/min auf einem Inkubationsschüttler bebrütet.

In der nachfolgenden Tabelle I sind die verwendeten Konzentrationen von MIT und BIT angegeben. Ferner ist daraus ersichtlich, ob jeweils ein Wachstum des Mikroorganismus stattfand (Symbol "+") oder nicht (Symbol "-").

Die Tabelle I zeigt somit auch die minimalen Hemmkonzentrationen (MHK). Hiernach ergibt sich beim Einsatz von MIT allein ein MHK-Wert von 17,5 ppm und beim Einsatz von BIT allein ein MHK-Wert von 25 ppm. Dagegen sind die MHK-Werte von Gemischen aus MIT und BIT deutlich niedriger, das heißt MIT und BIT wirken in ihrer Kombination synergistisch.

Tabelle I

| MHK-Werte bezüglich Escherichia coli bei einer Inkubationszeit von 72 h | | | | | | | | | | | | | |
|---|---|---|---|---|---|---|---|---|---|---|---|---|---|
| Konzentration MIT (ppm) | Konzentration BIT (ppm) | | | | | | | | | | | | |
| | 35 | 30 | 25 | 20 | 17,5 | 15 | 12,5 | 10 | 7,5 | 5 | 2,5 | 1 | 0 |
| 25 | - | - | - | - | - | - | - | - | - | - | - | - | - |
| 17,5 | - | - | - | - | - | - | - | - | - | - | - | - | - |
| 15 | - | - | - | - | - | - | - | - | - | - | - | - | + |
| 12,5 | - | - | - | - | - | - | - | - | - | - | - | + | + |
| 10 | - | - | - | - | - | - | - | - | - | - | - | + | + |
| 7,5 | - | - | - | - | - | - | - | - | - | + | + | + | + |
| 5 | - | - | - | - | - | - | - | + | + | + | + | + | + |
| 2,5 | - | - | - | - | + | + | + | + | + | + | + | + | + |
| 1 | - | - | - | + | + | + | + | + | + | + | + | + | + |
| 0 | - | - | - | + | + | + | + | + | + | + | + | + | + |

Der auftretende Synergismus wird mittels der in der Tabelle II angegebenen Berechnung des Synergieindex zahlenmäßig dargestellt. Die Berechnung des Synergieindex erfolgt nach der Methode von F.C. Kull et al., Applied Microbiology, Bd. 9 (1961), S. 538. Hier wird der Synergieindex mit der folgenden Formel berechnet:

$$\text{Synergieindex SI} = Q_a/Q_A + Q_b/Q_B.$$

Bei der Anwendung dieser Formel auf das hier geprüfte Biozidsystem haben die Größen in der Formel folgende Bedeutung:

$Q_a$ =   Konzentration von BIT im Biozidgemisch aus BIT und MIT

$Q_A$ =   Konzentration von BIT als einziges Biozid

$Q_b$ =   Konzentration von MIT im Biozidgemisch aus MIT und BIT

$Q_B$ =   Konzentration von MIT als einziges Biozid

Wenn der Synergieindex einen Wert von über 1 aufweist, bedeutet dies; daß ein Antagonismus vorliegt. Wenn der Synergieindex den Wert 1 annimmt, bedeutet dies, daß eine Addition der Wirkung der beiden Biozide gegeben ist. Wenn der Synergieindex einen Wert von unter 1 annimmt, bedeutet dies, daß ein Synergismus der beiden Biozide besteht.

Tabelle II

| Berechnung des Synergieindex bezüglich Escherichia coli bei einer Inkubationszeit von 72 h | | | | | | | |
| --- | --- | --- | --- | --- | --- | --- | --- |
| MHK bei | | Gesamtkonzentration BIT+MIT | Konzentration | | $Q_a/Q_A$ | $Q_b/Q_B$ | Synergie-index |
| BIT-Konzentration $Q_a$ (ppm) | MIT Konzetration $Q_b$ (ppm) | $Q_a + Q_b$ (ppm) | BIT (Gew%) | MIT (Gew%) | | | $Q_a/Q_A+Q_b/Q_B$ |
| 0 | 17,5 | 17,5 | 0,00 | 100,00 | 0,00 | 1,00 | 1,00 |
| 1 | 15 | 16 | 6,3 | 93,8 | 0,04 | 0,86 | 0,90 |
| 2,5 | 10 | 12,5 | 20,0 | 80,0 | 0,10 | 0,57 | 0,67 |
| 7,5 | 7,5 | 15 | 50,0 | 50,0 | 0,30 | 0,43 | 0,73 |
| 12,5 | 5 | 17,5 | 71,4 | 28,6 | 0,50 | 0,29 | 0,79 |
| 20 | 2,5 | 22,5 | 88,9 | 11,1 | 0,80 | 0,14 | 0,94 |
| 25 | 0 | 25 | 100,0 | 0,0 | 1,00 | 0,00 | 1,00 |

Aus der Tabelle II ist ersichtlich, daß der optimale Synergismus, d.h. der niedrigste Synergieindex (0,67) eines MIT/BIT-Gemisches, bei einem Gemisch aus 80 Gew% MIT und 20 Gew% BIT liegt.

Beispiel 2

Ähnlich wie im Beispiel 1 wird der Synergismus der beiden Wirkstoffe MIT und BIT gegenüber dem Mikroorganismus Pseudomonas putida aufgezeigt.

Die Versuchsansätze enthielten wieder eine Müller-Hinton-Bouillon als Nährmedium. Die Zelldichte lag bei $10^6$ Keime/ml. Die Inkubationszeit betrug 48 h bei 25°C. Jede Probe wurde mit 120 U/min auf einem Inkubationsschüttler bebrütet.

Aus der nachfolgenden Tabelle III sind die MHK-Werte der geprüften Biozidzusammensetzungen ersichtlich. Der MHK-Wert beim Einsatz von MIT allein betrug 12,5 ppm und beim Einsatz von BIT allein 60 ppm.

## Tabelle III

### MIIK-Werte bezüglich Pseudomonas putida
### bei einer Inkubationszeit von 48 h

| Konz. MIT (ppm) | Konzentration BIT (ppm) | | | | | | | | | | | | | | | |
|---|---|---|---|---|---|---|---|---|---|---|---|---|---|---|---|---|
| | 80 | 70 | 60 | 50 | 40 | 30 | 25 | 20 | 15 | 10 | 7,5 | 5 | 2,5 | 1 | 0,5 | 0 |
| 17,5 | - | - | - | - | - | - | - | - | - | - | - | - | - | - | - | - |
| 15 | - | - | - | - | - | - | - | - | - | - | - | - | - | - | - | - |
| 12,5 | - | - | - | - | - | - | - | - | - | - | - | - | - | - | - | - |
| 10 | - | - | - | - | - | - | - | - | - | - | - | - | - | + | + | + |
| 7,5 | - | - | - | - | - | - | - | - | - | - | - | - | + | + | + | + |
| 5 | - | - | - | - | - | - | - | - | + | + | + | + | + | + | + | + |
| 2,5 | - | - | - | - | - | - | - | + | + | + | + | + | + | + | + | + |
| 1 | - | - | - | - | - | - | + | + | + | + | + | + | + | + | + | + |
| 0,5 | - | - | - | - | - | + | + | + | + | + | + | + | + | + | + | + |
| 0 | - | - | - | + | + | + | + | + | + | + | + | + | + | + | + | + |

EP 1 005 271 B1

Bei gleichzeitigem Einsatz von MIT und BIT trat ein Synergismus ein. Die Berechnung des Synergieindex ergibt sich aus der Tabelle IV. Hiernach lag bei Pseudomonas putida der niedrigste Synergieindex (0,50) bei einem Gemisch aus 3,8 Gew% MIT und 96,2 Gew% BIT.

Tabelle IV

| Berechnung des Synergieindex bezüglich Pseudomonas putida bei einer Inkubationszeit von 48 h | | | | | | | |
|---|---|---|---|---|---|---|---|
| MHK bei | | Gesamtkonzentration BIT+MIT | Konzentration | | $Q_a/Q_A$ | $Q_b/Q_B$ | Synergie-index |
| BIT Konzentration $Q_a$ (ppm) | MIT Konzentration $Q_b$ (ppm) | $Q_a + Q_b$ (ppm) | BIT (Gew%) | MIT (Gew%) | | | $Q_a/Q_A+Q_b/Q_B$ |
| 0 | 12,5 | 12,5 | 0,0 | 100,0 | 0,00 | 1,00 | 1,00 |
| 2,5 | 10 | 12,5 | 20,0 | 80,0 | 0,04 | 0,80 | 0,84 |
| 5 | 7,5 | 12,5 | 40,0 | 60,0 | 0,08 | 0,60 | 0,68 |
| 15 | 5 | 20 | 75,0 | 25,0 | 0,25 | 0,40 | 0,65 |
| 20 | 2,5 | 22,5 | 88,9 | 11,1 | 0,33 | 0,20 | 0,53 |
| 25 | 1 | 26 | 96,2 | 3,8 | 0,42 | 0,08 | 0,50 |
| 40 | 0,5 | 40,5 | 98,8 | 1,2 | 0,67 | 0,04 | 0,71 |
| 60 | 0 | 60 | 100,0 | 0,0 | 1,00 | 0,00 | 1,00 |

Beispiel 3

Ähnlich wie im Beispiel 1 wird der Synergismus von MIT und BIT gegenüber dem Mikroorganismus Pseudomonas stutzeri aufgezeigt.

Die Versuchsansätze enthielten wieder eine Müller-Hinton-Bouillon als Nährmedium. Die Zelldichte lag bei $10^6$ Keime/ml. Die Inkubationszeit betrug 72 h bei 25°C. Jede Probe wurde mit 120 U/min auf einem Inkubationsschüttler bebrütet.

Aus der nachfolgenden Tabelle V sind die MHK-Werte der geprüften Biozidzusammensetzungen ersichtlich. Der MHK-Wert beim Einsatz von MIT allein betrug 12,5 ppm und beim Einsatz von BIT allein 20 ppm.

Tabelle V

| MHK-Werte bezüglich Pseudomonas stutzeri bei einer Inkubationszeit von 72 h | | | | | | | | | | | |
|---|---|---|---|---|---|---|---|---|---|---|---|
| Konzentration MIT (ppm) | Konzentration BIT (ppm) | | | | | | | | | | |
| | 30 | 25 | 20 | 15 | 10 | 7,5 | 5 | 2,5 | 1 | 0,5 | 0 |
| 30 | - | - | - | - | - | - | - | - | - | - | - |
| 25 | - | - | - | - | - | - | - | - | - | - | - |
| 20 | - | - | - | - | - | - | - | - | - | - | - |
| 17,5 | - | - | - | - | - | - | - | - | - | - | - |
| 15 | - | - | - | - | - | - | - | - | - | - | - |
| 12,5 | - | - | - | - | - | - | - | - | - | - | - |
| 10 | - | - | - | - | - | - | - | - | - | - | + |
| 7,5 | - | - | - | - | - | - | - | + | + | + | + |
| 5 | - | - | - | - | - | - | - | + | + | + | + |
| 2,5 | - | - | - | - | - | + | + | + | + | + | + |
| 1 | - | - | - | - | + | + | + | + | + | + | + |
| 0,5 | - | - | - | + | + | + | + | + | + | + | + |
| 0 | - | - | - | + | + | + | + | + | + | + | + |

Bei gleichzeitigem Einsatz von MIT und BIT trat ein Synergismus ein. Die Berechnung des Synergieindex ergibt sich aus der Tabelle VI. Hiernach lag bei Pseudomonas stutzeri der niedrigste Synergieindex (0,65) bei einem Gemisch aus 50 Gew% MIT und 50 Gew% BIT.

Tabelle VI

| Berechnung des Synergismus bezüglich Pseudomonas stutzeri bei einer Inkubationszeit von 72 h | | | | | | | |
|---|---|---|---|---|---|---|---|
| MHK bei | | Gesamtkonzentration BIT+MIT | Konzentration | | $Q_a/Q_A$ | $Q_b/Q_B$ | Synergie-index |
| BIT Konzentration $Q_a$ (ppm) | MIT Konzentration $Q_b$ (ppm) | $Q_a + Q_b$ (ppm) | BIT (Gew%) | MIT (Gew%) | | | $Q_a/Q_A + Q_b/Q_B$ |
| 0 | 12,5 | 12,5 | 0,0 | 100,0 | 0,00 | 1,00 | 1,00 |
| 0,5 | 10 | 10,5 | 4,8 | 95,2 | 0,03 | 0,80 | 0,83 |
| 5 | 5 | 10 | 50,0 | 50,0 | 0,25 | 0,40 | 0,65 |
| 10 | 2,5 | 12,5 | 80,0 | 20,0 | 0,50 | 0,20 | 0,70 |
| 15 | 1 | 16 | 93,8 | 6,3 | 0,75 | 0,08 | 0,83 |
| 20 | 0 | 20 | 100,0 | 0,0 | 1,00 | 0,00 | 1,00 |

Beispiel 4

Ähnlich wie im Beispiel 1 wird der Synergismus der beiden Wirkstoffe MIT und BIT gegenüber dem Mikroorganismus Klebsiella pneumoniae aufgezeigt.

Die Versuchsansätze enthielten wieder eine Müller-Hinton-Bouillon als Nährmedium. Die Zelldichte lag bei $10^6$ Keime/ml. Die Inkubationszeit betrug 72 h bei 25°C. Jede Probe wurde mit 120 U/min auf einem Inkubationsschüttler bebrütet.

Aus der nachfolgenden Tabelle VII sind die MHK-Werte der geprüften Biozidzusammensetzungen ersichtlich. Der MHK-Wert beim Einsatz von MIT allein betrug 20 ppm und beim Einsatz von BIT allein 25 ppm.

Tabelle VII

| MHK-Werte bezüglich Klebsiella pneumoniae bei einer Inkubationszeit von 72 h | | | | | | | | | | | |
|---|---|---|---|---|---|---|---|---|---|---|---|
| Konzentration MIT (ppm) | Konzentration BIT (ppm) | | | | | | | | | | |
| | 35 | 30 | 25 | 20 | 15 | 10 | 7,5 | 5 | 2,5 | 1 | 0 |
| 25 | - | - | - | - | - | - | - | - | - | - | - |
| 20 | - | - | - | - | - | - | - | - | - | - | - |
| 17,5 | - | - | - | - | - | - | - | - | - | + | + |
| 15 | - | - | - | - | - | - | - | - | - | + | + |
| 12,5 | - | - | - | - | - | - | - | - | - | + | + |
| 10 | - | - | - | - | - | - | - | - | + | + | + |
| 7,5 | - | - | - | - | - | - | - | + | + | + | + |
| 5 | - | - | - | - | - | + | + | + | + | + | + |
| 2,5 | - | - | - | + | + | + | + | + | + | + | + |
| 1 | - | - | - | + | + | + | + | + | + | + | + |
| 0 | - | - | - | + | + | + | + | + | + | + | + |

Bei gleichzeitigem Einsatz von MIT und BIT trat ein Synergismus ein. Die Berechnung des Synergieindex ergibt sich aus der Tabelle VIII. Hiernach lag bei Pseudomonas aeruginosa der niedrigste Synergieindex (0,68) bei einem Gemisch aus 50 Gew% MIT und 50 Gew% BIT.

Tabelle VIII

| Berechnung des Synergieindex bezüglich Klebsiella pneumoniae bei einer Inkubationszeit von 72 h | | | | | | | |
|---|---|---|---|---|---|---|---|
| MHK bei | | Gesamtkonzentration BIT+MIT | Konzentration | | $Q_a/Q_A$ | $Q_b/Q_B$ | Synergie-index |
| BIT Konzentration $Q_a$ (ppm) | MIT Konzentration $Q_b$ (ppm) | $Q_a + Q_b$ (ppm) | BIT (Gew%) | MIT (Gew%) | | | $Q_a/$ $Q_A+Q_b/$ $Q_B$ |
| 0 | 20 | 20 | 0,0 | 100,0 | 0,00 | 1,00 | 1,00 |
| 2,5 | 12,5 | 15 | 16,7 | 83,3 | 0,10 | 0,63 | 0,73 |
| 5 | 10 | 15 | 33,3 | 66,7 | 0,20 | 0,50 | 0,70 |
| 7,5 | 7,5 | 15 | 50,0 | 50,0 | 0,30 | 0,38 | 0,68 |
| 15 | 5 | 20 | 75,0 | 25,0 | 0,60 | 0,25 | 0,85 |
| 25 | 0 | 25 | 100,0 | 0,0 | 1,00 | 0,00 | 1,00 |

Beispiel 5

Ähnlich wie im Beispiel 1 wird der Synergismus der beiden Wirkstoffe MIT und BIT gegenüber dem Mikroorganismus Pseudomonas aeruginosa aufgezeigt.

Die Versuchsansätze enthielten wieder eine Müller-Hinton-Bouillon als Nährmedium. Die Zelldichte lag bei $10^6$ Keime/ml. Die Inkubationszeit betrug 48 h bei 25°C. Jede Probe wurde mit 120 U/min auf einem Inkubationsschüttler bebrütet.

Aus der nachfolgenden Tabelle IX sind die MHK-Werte der geprüften Biozidzusammensetzungen ersichtlich. Der MHK-Wert beim Einsatz von MIT allein betrug 30 ppm und beim Einsatz von BIT allein 150 ppm.

Tabelle IX

| MHK-Werte bezüglich Pseudomonas aeruginosa bei einer Inkubationszeit von 48 h | | | | | | | | | | | |
|---|---|---|---|---|---|---|---|---|---|---|---|
| Konzentration MIT (ppm) | Konzentration BIT (ppm) | | | | | | | | | | |
| | 200 | 175 | 150 | 125 | 100 | 75 | 50 | 25 | 10 | 5 | 0 |
| 50 | - | - | - | - | - | - | - | - | - | - | - |
| 40 | - | - | - | - | - | - | - | - | - | - | - |
| 30 | - | - | - | - | - | - | - | - | - | - | - |
| 20 | - | - | - | - | - | - | - | - | - | + | + |
| 10 | - | - | - | - | - | - | - | + | + | + | + |
| 5 | - | - | - | - | - | + | + | + | + | + | + |
| 2,5 | - | - | - | - | + | + | + | + | + | + | + |
| 1 | - | - | - | + | + | + | + | + | + | + | + |
| 0 | - | - | - | + | + | + | + | + | + | + | + |

Bei gleichzeitigem Einsatz von MIT und BIT trat ein Synergismus ein. Die Berechnung des Synergieindex ergibt sich aus der Tabelle X. Hiernach lag bei Pseudomonas aeruginosa der niedrigste Synergieindex (0,67) bei einem Gemisch aus 16,7 Gew% MIT und 83,3 Gew% BIT.

Tabelle X

| Berechnung des Synergieindex bezüglich Pseudomonas aeruginosa bei einer Inkubationszeit von 48 h | | | | | | | |
|---|---|---|---|---|---|---|---|
| MHK bei | | Gesamtkonzentration BIT+MI | Konzentration | | $Q_a/Q_A$ | $Q_b/Q_B$ | Synergie-index |
| BIT Konzentration $Q_a$ (ppm) | MIT Konzentration $Q_b$ (ppm) | $Q_a + Q_b$ (ppm) | BIT (Gew%) | MIT (Gew%) | | | $Q_a/$ $Q_A+Q_b/$ $Q_B$ |
| 0 | 30 | 30 | 0,0 | 100,0 | 0,00 | 1,00 | 1,00 |

Tabelle X   (fortgesetzt)

| Berechnung des Synergieindex bezüglich Pseudomonas aeruginosa bei einer Inkubationszeit von 48 h | | | | | | | |
|---|---|---|---|---|---|---|---|
| MHK bei | | Gesamtkonzentration BIT+MI | Konzentration | | $Q_a/Q_A$ | $Q_b/Q_B$ | Synergie-index |
| BIT Konzentration $Q_a$ (ppm) | MIT Konzentration $Q_b$ (ppm) | $Q_a + Q_b$ (ppm) | BIT (Gew%) | MIT (Gew%) | | | $Q_a/Q_A + Q_b/Q_B$ |
| 10 | 20 | 30 | 33,3 | 66,7 | 0,07 | 0,67 | 0,73 |
| 50 | 10 | 60 | 83,3 | 16,7 | 0,33 | 0,33 | 0,67 |
| 100 | 5 | 105 | 95,2 | 4,8 | 0,67 | 0,17 | 0,83 |
| 125 | 2,5 | 127,5 | 98,0 | 2,0 | 0,83 | 0,08 | 0,92 |
| 150 | 0 | 150 | 100,0 | 0,0 | 1,00 | 0,00 | 1,00 |

Beispiel 6

Es wurde eine Biozidzusammensetzung aus folgenden Komponenten hergestellt:

| Komponente | Menge (Gew%) |
|---|---|
| 2-Methylisothiazolin-3-on (98 gew%-ig) | 5,1 |
| 1,2-Benzisothiazolin-3-on (in Form eines Gemisches aus 74,6 Gew% BIT und 25,4 Gew% Wasser; Handelsprodukt "Acticide® BIT" der Firma Thor Chemie GmbH) | 6,7 |
| Polyethylenglykol (mittlere Molmasse 400 g/mol) | 88,2 / 100,0 |

Die fertige Formulierung der Biozidzusammensetzung ist eine klare Lösung, was auf das Polyethylenglykol zurückzuführen ist. Die Lösung eignet sich für den Einsatz z. B. in Anstrichmitteln, Polymerdispersionen, Putzmörtelsystemen und Kühlschmierstoffen gegen den Befall durch Bakterien, filamentöse Pilze und Hefen.

Beispiel 7

Es wurde eine Biozidzusammensetzung aus den folgenden Komponenten hergestellt:

| Komponente | Menge (Gew%) |
|---|---|
| 2-Methylisothiazolin-3-on (in Form einer Lösung von 20 Gew% MIT in Wasser) | 25 |
| 1,2-Benzisothiazolin-3-on (in Form einer Suspension von von 20 Gew% BIT in Wasser; Handelsprodukt "Acticide® BW 20" der Firma Thor Chemie GmbH) | 25 |
| Verdicker auf Xanthan-Basis (Handelsprodukt "Rhodopol 50 MD" der Firma Rhône-Poulenc) | 0,4 |
| Entschäumer (Handelsprodukt "Drewplus T 4202" der Firma Drew Ameroid) | 0,1 |
| Wasser | 49,5 / 100,0 |

In der fertigen Formulierung der Biozidzusammensetzung liegt das BIT in fein suspendierter Form vor. Die Formulierung eignet sich für die Einsatzzwecke, die vorstehend in der Beschreibung angegeben sind.

Beispiel 8

Es wurde eine Biozidzusammensetzung aus folgenden Komponenten hergestellt:

| Komponente | Menge (Gew%) |
|---|---|
| 1, 2-Benzisothiazolin-3-on (als Gemisch aus 74,6 Gew% BIT und 25,4 Gew% Wasser) | 3,35 |
| Wasser | 92,8 |
| Natriumhydroxidlösung (50 gew%-ig in Wasser) | 1,3 |
| 2-Methylisothiazolin-3-on (98 gew%-ig) | 2,55 |
| | 100,00 |

Das BIT-Wasser-Gemisch (Gewichtsverhältnis 74,6:25,4) wurde mit dem zusätzlichen Wasser versetzt und dann durch Zugabe der Natriumhydroxidlösung in eine Lösung überführt, die wegen der Bildung des entsprechenden Natriumsalzes entsteht. Schließlich wurde das MIT zugegeben. Die fertige Formulierung war eine klare Lösung und hatte einen pH-Wert von ca. 8,2.

Die fertige Formulierung der Biozidzusammensetzung eignet sich für die Einsatzzwecke, die vorstehend angegeben sind.

Beispiel 9

Es wurden erfindungsgemäße Biozidzusammensetzungen in eine Beschichtungsmasse A eingearbeitet, die zum Beschichten von Fassaden dient. Bei dieser Beschichtungsmasse handelt es sich um einen Putz auf der Basis einer wäßrigen Polymerdispersion, der unter der Kennzeichnung "Granol KR 3.0" im Handel (Firma Steinwerke Kupferdreh GmbH) erhältlich ist. Der Zusatz der erfindungsgemäßen Biozidzusammensetzung diente der Konservierung der Beschichtungsmasse vor ihrer Verwendung, d.h. während der Lagerung in ihren Gebinden.

Es wurden jeweils 50 g der Beschichtungsmasse A mit den in der nachfolgenden Tabelle XI angegebenen Bioziden versetzt. Die genannten Biozidmengen beziehen sich auf die Menge der Beschichtungsmasse A. In den Gemischen MIT/BIT lagen die beiden Biozide im Gewichtsverhältnis von 1:1 vor.

Außer einer Blindprobe ohne Biozidzusatz wurde jede Probe der Beschichtungsmasse A mit 1 ml eines Standard-Bakterieninoculums versetzt, das folgende Bakterienstämme enthielt:

Shewanella putrefaciens
Alcaligenes faecalis
Serratia liquefaciens
Klebsiella species
Proteus penneri/vulgaris
Providencia rettgeri
Pseudomonas fluorescens
Pseudomonas aeruginosa
Pseudomonas stutzeri
Escherichia coli
Corynebacterium pseudodiphteriae
Cellulomonas flavigena
Corynebacterium species

Die Zelldichte des Inoculums lag bei $10^{10}$ bis $3\cdot10^{10}$ Keime/ml, die Zelldichte der Proben bei $2\cdot10^{8}$ bis $6\cdot10^{8}$ Keime/g. Die Proben wurden 7 Tage bei 30°C gelagert. Anschließend wurde von jeder Probe ein Ausstrich auf einer Nutrient-Agar-Platte hergestellt, 48 h bei 30°C gelagert und dann hinsichtlich des Bakterienwachstums beurteilt. Dabei wurde folgender Bewertungsmaßstab angewandt:

0 =    kein Wachstum
1 =    minimales Wachstum bis zu 10 Kolonien
2 =    leichtes Wachstum bis zu 100 Kolonien

3 =     mäßiges Wachstum bis zu 300 Kolonien

4 =     gleichmäßiges Wachstum, einzelne Kolonien noch erkennbar

5 =     starkes Wachstum, zu viele Kolonien zum Auszählen, aber nicht gesamte Oberfläche bewachsen

6 =     flächiges Wachstum, kaum Einzelkolonien, gesamte Ausstrichfläche bewachsen

Wenn das Bakterienwachstum mit einem Wert von unter 6 beurteilt wurde, fügte man der zugehörigen ursprünglichen 50g-Probe ein zweites Bakterieninoculum der vorgenannten Art zu und lagerte sie wieder 7 Tage bei 30°C. Anschließend wurde erneut ein Ausstrich auf einer Nutrient-Agar-Platte hergestellt, der nach einer Lagerzeit von 48 h bei 30°C wiederum auf sein Bakterienwachstum hin geprüft wurde.

Wenn bei einer Probe das Bakterienwachstum des Ausstrichs den Wert 6 erhielt, wurde damit die Prüfung dieser Probe beendet. Solange eine Probe diesen Wert nicht erreicht hat, wurde sie erneut in der vorgenannten Weise mit einem Bakterieninoculum versetzt und gelagert sowie durch einen Ausstrich überprüft. Dieses Vorgehen wurde nötigenfalls wiederholt, wobei höchstens vier Bakterieninoculi je Probe zugesetzt wurden.

In der Tabelle XI sind die Ergebnisse für die Beschichtungsmasse A zusammengefaßt.

Tabelle XI

| Beschichtungsmasse A | | |
|---|---|---|
| Biozid (Gew%) | | Bakterienwachstum (7 Tage + 48 h nach 4. Inokulation) |
| | ohne | (Wachstum schon nach 1. Inokulation) |
| BIT | 0,005 | (Wachstum schon nach 1. Inokulation) |
| | 0,01 | (Wachstum schon nach 1. Inokulation) |
| | 0,015 | (Wachstum schon nach 2. Inokulation) |
| | 0,02 | (Wachstum schon nach 2. Inokulation) |
| | 0,03 | (Wachstum schon nach 3. Inokulation) |
| MIT | 0,005 | 6 |
| | 0,01 | 5 |
| | 0,015 | 5 |
| | 0,02 | 4 |
| | 0,03 | 0 |
| MIT/BIT | 0,005 | 5 |
| | 0,01 | 0 |
| | 0,015 | 0 |
| | 0,02 | 0 |
| | 0,03 | 0 |

Aus der Tabelle XI ist ersichtlich, daß die Probe ohne Biozidzusatz bereits nach dem ersten Inoculum ein volles Bakterienwachstum ergab.

Im Falle des Zusatzes von BIT allein war das volle Bakterienwachstum bei 0,005 Gew% BIT bereits nach der ersten Inokulation, bei 0,015 Gew% BIT nach der zweiten Inokulation und bei 0,03 Gew% BIT nach der dritten Inokulation erreicht.

Im Falle des Zusatzes von MIT allein wurde das volle Bakterienwachstum erst nach vier Inokulationen erreicht, und zwar bei der kleinsten Biozidmenge von 0,005 Gew%. Aber auch bei den höheren Biozidkonzentrationen von 0,01, 0,015 und 0,02 Gew% MIT wurde noch ein gleichmäßiges bis starkes Bakterienwachstum festgestellt. Nur bei der Probe mit der höchsten Konzentration von 0,03 Gew% MIT wurde auch nach vier Inokulationen kein Bakterienwachstum festgestellt.

Dagegen erwies sich die erfindungsgemäße Biozidzusammensetzung aus MIT und BIT als wesentlich wirksamer. Nach vier Inokulationen trat nur bei der geringsten Konzentration von 0,005 Gew% MIT/BIT noch ein deutliches Bakterienwachstum ein. Bei den höheren Konzentrationen im Bereich von 0,01 bis 0,03 Gew% MIT/BIT wurde das Bakterienwachstum in der Beschichtungsmasse A vollkommen verhindert.

Beispiel 10

Beispiel 9 wurde wiederholt, jedoch unter Einsatz der Beschichtungsmasse B anstelle der Beschichtungsmasse A.

Bei der Beschichtungsmasse B handelt es sich um einen besonders emissionsarmen Putz auf der Basis einer Polymerdispersion, der unter der Kennzeichnung "Granol KR 3.0 LF" im Handel (Firma Steinwerke Kupferdreh GmbH) erhältlich ist.

Die Ergebnisse mit der Beschichtungsmasse B sind in der nachfolgenden Tabelle XII zusammengefaßt.

Tabelle XII

| Beschichtungsmasse B | | |
|---|---|---|
| Biozid (Gew%) | | Bakterienwachstum (7 Tage + 48 h nach 4. Inokulation) |
| | ohne | (Wachstum schon nach 1. Inokulation) |
| BIT | 0,005 | (Wachstum schon nach 1. Inokulation) |
| | 0,01 | (Wachstum schon nach 1. Inokulation) |
| | 0,015 | (Wachstum schon nach 2. Inokulation) |
| | 0,02 | (Wachstum schon nach 2. Inokulation) |
| | 0,03 | (Wachstum schon nach 3. Inokulation) |
| MIT | 0,005 | 4 |
| | 0,01 | 1 |
| | 0,015 | 1 |
| | 0,02 | 0 |
| | 0,03 | 0 |
| MIT/BIT | 0,005 | 5 |
| | 0,01 | 0 |
| | 0,015 | 0 |
| | 0,02 | 0 |
| | 0,03 | 0 |

Die Ergebnisse mit der Beschichtungsmasse B entsprechen weitgehend jenen bei der Beschichtungsmasse A.

Auch im Falle der Beschichtungsmasse B erfolgte schon nach der ersten Inokulation ein volles Bakterienwachstum.

Beim Einsatz von BIT allein war spätestens nach der dritten Inokulation vollständiger Bakterienbefall zu beobachten.

Bei Verwendung von MIT allein konnte nach der vierten Inokulation nur mit den höchsten Konzentrationen von 0,02 und 0,03 Gew% das Bakterienwachstum ganz verhindert werden.

Dagegen gelang es mit der erfindungsgemäßen Kombination MIT/BIT, bereits mit der relativ niedrigen Konzentration von 0,01 Gew% das Bakterienwachstum vollkommen zu unterdrücken.

Beispiel 11

Ähnlich wie im Beispiel 1 wird der Synergismus der beiden Wirkstoffe MIT und BIT gegenüber dem Mikroorganismus Aspergillus niger aufgezeigt.

Die Versuchsansätze enthielten ein Sabouraud-Maltose-Bouillon als Nährmedium. Die Sporenkonzentration lag bei $10^6$ pro ml. Die Inkubationszeit betrug 96 h bei 25°C. Jede Probe wurde mit 120 U/min auf einem Inkubationsschüttler bebrütet.

Aus der nachfolgenden Tabelle XIII sind die MHK-Werte der geprüften Biozidzusammensetzungen ersichtlich. Der MHK-Wert beim Einsatz von MIT allein betrug 750 ppm und beim Einsatz von BIT allein 100 ppm.

Tabelle XIII

| MHK-Werte bezüglich Aspergillus niger bei einer Inkubationszeit von 96 h | | | | | | | | |
|---|---|---|---|---|---|---|---|---|
| Konz. MIT (ppm) | Konzentration BIT (ppm) | | | | | | | |
| | 150 | 100 | 75 | 50 | 25 | 10 | 5 | 0 |
| 750 | - | - | - | - | - | - | - | - |
| 500 | - | - | - | - | - | - | + | + |
| 250 | - | - | - | - | - | + | + | + |
| 100 | - | - | - | - | + | + | + | + |
| 75 | - | - | - | - | + | + | + | + |
| 50 | - | - | - | + | + | + | + | + |
| 25 | - | - | - | + | + | + | + | + |
| 10 | - | - | + | + | + | + | + | + |
| 0 | - | - | + | + | + | + | + | + |

Bei gleichzeitigem Einsatz von MIT und BIT trat ein Synergismus ein. Die Berechnung des Synergieindex ergibt sich aus der Tabelle XIV. Hiernach lag bei Aspergillus niger der niedrigste Synergieindex (0,57) bei einem Gemisch aus 50 Gew% MIT und 50 Gew% BIT.

Tabelle XIV

| Berechnung des Synergieindex bezüglich Aspergillus niger bei einer Inkubationszeit von 96 h | | | | | | | |
|---|---|---|---|---|---|---|---|
| MHK bei | | Gesamtkonzentration MIT+BIT | Konzentration | | $Q_a/Q_A$ | $Q_b/Q_B$ | Synergie-index |
| MIT Konzentration $Q_a$ (ppm) | BIT Konzentration $Q_b$ (ppm) | $Q_a + Q_b$ (ppm) | MIT (Gew%) | BIT (Gew%) | | | $Q_a/Q_A+Q_b/Q_B$ |
| 0 | 100 | 100 | 0,0 | 100,0 | 0,00 | 1,00 | 1,00 |
| 25 | 75 | 100 | 25,0 | 75,0 | 0,03 | 0,75 | 0,78 |
| 50 | 75 | 125 | 40,0 | 60,0 | 0,07 | 0,75 | 0,82 |
| 50 | 50 | 100 | 50,0 | 50,0 | 0,07 | 0,50 | 0,57 |
| 75 | 75 | 150 | 50,0 | 50,0 | 0,10 | 0,75 | 0,85 |
| 75 | 50 | 125 | 60,0 | 40,0 | 0,10 | 0,50 | 0,60 |
| 100 | 50 | 150 | 66,7 | 33,3 | 0,13 | 0,50 | 0,63 |
| 250 | 50 | 300 | 83,3 | 16,7 | 0,33 | 0,50 | 0,83 |
| 250 | 25 | 275 | 90,9 | 9,1 | 0,33 | 0,25 | 0,58 |
| 500 | 25 | 525 | 95,2 | 4,8 | 0,67 | 0,25 | 0,92 |
| 500 | 10 | 510 | 98,0 | 2,0 | 0,67 | 0,10 | 0,77 |
| 750 | 0 | 750 | 100,0 | 0,0 | 1,00 | 0,00 | 1,00 |

Beispiel 12

Ähnlich wie im Beispiel 1 wird der Synergismus der beiden Wirkstoffe MIT und BIT gegenüber dem Mikroorganismus Penicillium funiculosum aufgezeigt.

Die Versuchsansätze enthielten eine Sabouraud-Maltose-Bouillon als Nährmedium. Die Sporenkonzentration lag bei $10^6$ pro ml. Die Inkubationszeit betrug 96 h bei 25°C. Jede Probe wurde mit 120 U/min auf einem Inkubationsschüttler bebrütet.

Aus der nachfolgenden Tabelle XV sind die MHK-Werte der geprüften Biozidzusammensetzungen ersichtlich. Der MHK-Wert beim Einsatz von MIT allein betrug 200 ppm und beim Einsatz von BIT allein 40 ppm.

Tabelle XV

| Konz. MIT (ppm) | MHK-Werte bezüglich Penicillium funiculosum bei einer Inkubationszeit von 96 h | | | | | | | |
|---|---|---|---|---|---|---|---|---|
| | Konzentration BIT (ppm) | | | | | | | |
| | 75 | 50 | 40 | 30 | 20 | 15 | 10 | 0 |
| 200 | - | - | - | - | - | - | - | - |
| 150 | - | - | - | - | - | - | - | + |
| 100 | - | - | - | - | - | - | - | + |
| 75 | - | - | - | - | - | - | + | + |
| 50 | - | - | - | - | - | + | + | + |
| 25 | - | - | - | - | - | + | + | + |
| 10 | - | - | - | - | - | + | + | + |
| 5 | - | - | - | + | + | + | + | + |
| 0 | - | - | - | + | + | + | + | + |

Bei gleichzeitigem Einsatz von MIT und BIT trat ein Synergismus ein. Die Berechnung des Synergieindex ergibt sich aus der Tabelle XVI. Hiernach lag bei Penicillium funiculosum der niedrigste Synergieindex (0,55) bei einem Gemisch aus 33,3 Gew% MIT und 66,7 Gew% BIT.

Tabelle XVI

| Berechnung des Synergieindex bezüglich Penicillium funiculösum bei einer Inkubationszeit von 96 h | | | | | | | |
|---|---|---|---|---|---|---|---|
| MHK bei | | Gesamtkonzentration MIT+BIT | Konzentration | | $Q_a/Q_A$ | $Q_b/Q_B$ | Synergie-index |
| MIT Konzentration $Q_a$ (ppm) | BIT Konzentration $Q_b$ (ppm) | $Q_a + Q_b$ (ppm) | MIT (Gew%) | BIT (Gew%) | | | $Q_a/Q_A + Q_b/Q_B$ |
| 0 | 40 | 40 | 0,0 | 100,0 | 0,00 | 1,00 | 1,00 |
| 10 | 30 | 40 | 25,0 | 75,0 | 0,05 | 0,75 | 0,80 |
| 10 | 20 | 30 | 33,3 | 66,7 | 0,05 | 0,50 | 0,55 |
| 25 | 30 | 55 | 45,5 | 54,5 | 0,13 | 0,75 | 0,88 |
| 25 | 20 | 45 | 55,6 | 44,4 | 0,13 | 0,50 | 0,63 |
| 50 | 20 | 70 | 71,4 | 28,6 | 0,25 | 0,50 | 0,75 |
| 75 | 20 | 95 | 78,9 | 21,1 | 0,38 | 0,50 | 0,88 |
| 75 | 15 | 90 | 83,3 | 16,7 | 0,38 | 0,38 | 0,75 |
| 100 | 15 | 115 | 87,0 | 13,0 | 0,50 | 0,38 | 0,88 |
| 100 | 10 | 110 | 90,9 | 9,1 | 0,50 | 0,25 | 0,75 |
| 200 | 0 | 200 | 100,0 | 0,0 | 1,00 | 0,00 | 1,00 |

Beispiel 13

Ähnlich wie im Beispiel 1 wird der Synergismus eines Wirkstoffgemisches, das außer MIT und BIT noch zusätzlich 3-Iod-2-propinyl-N-butylcarbamat (IPBC) enthält, gegenüber dem Mikroorganismus Aspergillus niger aufgezeigt.

Die Versuchsansätze enthielten eine Sabouraud-Maltose-Bouillon als Nährmedium. Die Sporenkonzentration lag bei $10^6$ pro ml. Die Inkubationszeit betrug 72 h bei 25°C. Jede Probe wurde mit 120 U/min auf einem Inkubationsschüttler bebrütet.

Aus der nachfolgenden Tabelle XVII sind die MHK-Werte der geprüften Biozidzusammensetzungen ersichtlich. Der MHK-Wert beim Einsatz des Gemisches MIT/BIT allein betrug 150 ppm und beim Einsatz von IPBC allein 2,5 ppm.

Tabelle XVII

| MHK-Werte bezüglich Aspergillus niger bei einer Inkubationszeit von 72 h | | | | | | | | | | | |
|---|---|---|---|---|---|---|---|---|---|---|---|
| Konz. MIT/BIT (ppm) | Konzentration IPBC (ppm) | | | | | | | | | | |
| | 5 | 4,5 | 4 | 3,5 | 3 | 2,5 | 2 | 1,5 | 1 | 0,75 | 0 |
| 250 | - | - | - | - | - | - | - | - | - | - | - |
| 225 | - | - | - | - | - | - | - | - | - | - | - |
| 200 | - | - | - | - | - | - | - | - | - | - | - |
| 175 | - | - | - | - | - | - | - | - | - | - | - |
| 150 | - | - | - | - | - | - | - | - | - | - | - |
| 125 | - | - | - | - | - | - | - | - | - | - | + |
| 100 | - | - | - | - | - | - | - | - | - | - | + |
| 75 | - | - | - | - | - | - | - | - | - | - | + |
| 50 | - | - | - | - | - | - | - | - | + | + | + |
| 25 | - | - | - | - | - | - | + | + | + | + | + |
| 10 | - | - | - | - | - | - | + | + | + | + | + |
| 0 | - | - | - | - | - | - | + | + | + | + | + |

Beim Einsatz des vorgenannten Gemisches aus MIT und BIT sowie einem Zusatz an IPBC trat ein Synergismus ein. Die Berechnung des Synergieindex ergibt sich aus der Tabelle XVIII. Hiernach lag bei Aspergillus niger der niedrigste Synergieindex (0,80) bei einem Gemisch aus einerseits 99,0 Gew% MIT/BIT und andererseits 1,0 Gew% IPBC.

Tabelle XVIII

| Berechnung des Synergieindex bezüglich Aspergillus niger bei einer Inkubationszeit von 72 h | | | | | | | |
|---|---|---|---|---|---|---|---|
| MHK bei | | Gesamtkonzentration MIT/BIT +IPBC | Konzentration | | $Q_a/Q_A$ | $Q_b/Q_B$ | Synergie-index |
| MIT/BIT Konzentration $Q_a$ (ppm) | IPBC Konzentration $Q_b$ (ppm) | $Q_a + Q_b$ (ppm) | MIT/BIT (Gew%) | IPBC (Gew%) | | | $Q_a/Q_A+Q_b/Q_B$ |
| 150 | 0 | 150 | 100,0 | 0,0 | 1,00 | 0,00 | 1,00 |
| 75 | 0,75 | 75,75 | 99,0 | 1,0 | 0,50 | 0,30 | 0,80 |
| 75 | 1 | 76 | 98,7 | 1,3 | 0,50 | 0,40 | 0,90 |
| 50 | 1,5 | 51,5 | 97,1 | 2,9 | 0,33 | 0,60 | 0,93 |
| 0 | 2,5 | 2,5 | 0,0 | 100,0 | 0,00 | 1,00 | 1,00 |

Beispiel 14

Ähnlich wie im Beispiel 1 wird der Synergismus eines Wirkstoffgemisches, das außer MIT und BIT noch zusätzlich IPBC enthält, gegenüber dem Mikroorganismus Penicillium funiculosum aufgezeigt.

Die Versuchsansätze enthielten eine Sabouraud-Maltose-Bouillon als Nährmedium. Die Sporenkonzentration lag bei $10^6$ pro ml. Die Inkubationszeit betrug 72 h bei 25°C. Jede Probe wurde mit 120 U/min auf einem Inkubationsschüttler bebrütet.

Aus der nachfolgenden Tabelle XIX sind die MHK-Werte der geprüften Biozidzusammensetzungen ersichtlich. Der MHK-Wert beim Einsatz des Gemisches MIT/BIT allein betrug 20 ppm und beim Einsatz von IPBC allein 0,75 ppm.

Tabelle XIX

| MHK-Werte bezüglich Penicillium funiculosum bei einer Inkubationszeit von 72 h | | | | | | | | | | | |
|---|---|---|---|---|---|---|---|---|---|---|---|
| Konz. MIT/BIT (ppm) | Konzentration IPBC (ppm) | | | | | | | | | | |
| | 2 | 1,75 | 1,5 | 1,25 | 1 | 0,75 | 0,5 | 0,3 | 0,2 | 0,1 | 0 |
| 50 | - | - | - | - | - | - | - | - | - | - | - |

Tabelle XIX   (fortgesetzt)

| MHK-Werte bezüglich Penicillium funiculosum bei einer Inkubationszeit von 72 h | | | | | | | | | | | |
|---|---|---|---|---|---|---|---|---|---|---|---|
| Konz. MIT/BIT (ppm) | Konzentration IPBC (ppm) | | | | | | | | | | |
| | 2 | 1,75 | 1,5 | 1,25 | 1 | 0,75 | 0,5 | 0,3 | 0,2 | 0,1 | 0 |
| 45 | - | - | - | - | - | - | - | - | - | - | - |
| 40 | - | - | - | - | - | - | - | - | - | - | - |
| 35 | - | - | - | - | - | - | - | - | - | - | - |
| 30 | - | - | - | - | - | - | - | - | - | - | - |
| 25 | - | - | - | - | - | - | - | - | - | - | - |
| 20 | - | - | - | - | - | - | - | - | - | - | - |
| 15 | - | - | - | - | - | - | - | - | - | - | + |
| 12,5 | - | - | - | - | - | - | - | - | - | + | + |
| 10 | - | - | - | - | - | - | - | - | - | + | + |
| 7,5 | - | - | - | - | - | - | - | + | + | + | + |
| 0 | - | - | - | - | - | - | + | + | + | + | + |

Beim Einsatz des vorgenannten Gemisches aus MIT und BIT sowie einem Zusatz an IPBC trat ein Synergismus ein. Die Berechnung des Synergieindex ergibt sich aus der Tabelle XX. Hiernach lag bei Penicillium funiculosum der niedrigste Synergieindex (0,77) bei einem Gemisch aus einerseits 98,0 Gew% MIT/BIT und andererseits 2,0 Gew% IPBC.

Tabelle XX

| Berechnung des Synergieindex bezüglich Penicillium funiculosum bei einer Inkubationszeit von 72 h | | | | | | | |
|---|---|---|---|---|---|---|---|
| MHK bei | | Gesamtkonzentration MIT/BIT +IPBC | Konzentration | | $Q_a/Q_A$ | $Q_b/Q_B$ | Synergie-index |
| MIT/BIT Konzentration $Q_a$ (ppm) | IPBC Konzentration $Q_b$ (ppm) | $Q_a + Q_b$ (ppm) | MIT/BIT (Gew%) | IPBC (Gew%) | | | $Q_a/Q_A+Q_b/Q_B$ |
| 0 | 0,75 | 0,75 | 0,0 | 100,0 | 0,00 | 1,00 | 1,00 |
| 10 | 0,3 | 10,3 | 97,1 | 2,9 | 0,50 | 0,40 | 0,90 |
| 10 | 0,2 | 10,2 | 98,0 | 2,0 | 0,50 | 0,27 | 0,77 |
| 12,5 | 0,2 | 12,7 | 98,4 | 1,6 | 0,63 | 0,27 | 0,89 |
| 15 | 0,1 | 15,1 | 99,3 | 0,7 | 0,75 | 0,13 | 0,88 |
| 20 | 0 | 20 | 100,0 | 0,0 | 1,00 | 0,00 | 1,00 |

Beispiel 15

Ähnlich wie im Beispiel 1 wird der Synergismus eines Wirkstoffgemisches, das außer MIT und BIT noch zusätzlich 2-n-Octylisothiazolin-3-on (OIT) enthält, gegenüber dem Mikroorganismus Aspergillus niger aufgezeigt.

Die Versuchsansätze enthielten eine Sabouraud-Maltose-Bouillon als Nährmedium. Die Sporenkonzentration lag bei $10^6$ pro ml. Die Inkubationszeit betrug 72 h bei 25°C. Jede Probe wurde mit 120 U/min auf einem Inkubationsschüttler bebrütet.

Aus der nachfolgenden Tabelle XXI sind die MHK-Werte der geprüften Biozidzusammensetzungen ersichtlich. Der MHK-Wert beim Einsatz des Gemisches MIT/BIT allein betrug 100 ppm und beim Einsatz von OIT allein 5 ppm.

Tabelle XXI

| MHK-Werte bezüglich Aspergillus niger bei einer Inkubationszeit von 72 h | | | | | | | | |
|---|---|---|---|---|---|---|---|---|
| Konz. MIT/BIT (ppm) | Konzentration OIT (ppm) | | | | | | | |
| | 10 | 7,5 | 5 | 2,5 | 1 | 0,5 | 0,25 | 0 |
| 200 | - | - | - | - | - | - | - | - |

Tabelle XXI   (fortgesetzt)

| MHK-Werte bezüglich Aspergillus niger bei einer Inkubationszeit von 72 h | | | | | | | | |
|---|---|---|---|---|---|---|---|---|
| Konz. MIT/BIT (ppm) | Konzentration OIT (ppm) | | | | | | | |
| | 10 | 7,5 | 5 | 2,5 | 1 | 0,5 | 0,25 | 0 |
| 150 | - | - | - | - | - | - | - | - |
| 100 | - | - | - | - | - | - | - | - |
| 80 | - | - | - | - | - | - | - | + |
| 60 | - | - | - | - | - | + | + | + |
| 40 | - | - | - | - | + | + | + | + |
| 30 | - | - | - | - | + | + | + | + |
| 20 | - | - | - | + | + | + | + | + |
| 10 | - | - | - | + | + | + | + | + |
| 0 | - | - | - | + | + | + | + | + |

Beim Einsatz des vorgenannten Gemisches aus MIT und BIT sowie einem Zusatz an OIT trat ein Synergismus ein. Die Berechnung des Synergieindex ergibt sich aus der Tabelle XXII. Hiernach lag bei Aspergillus niger der niedrigste Synergieindex (0,80) bei einem Gemisch aus einerseits 92,3 Gew% MIT/BIT und andererseits 7,7 Gew% OIT sowie auch bei einem Gemisch aus einerseits 98,4 Gew% MIT/BIT und andererseits 1,6 Gew% OIT.

Tabelle XXII

| Berechnung des Synergieindex bezüglich Aspergillus niger bei einer Inkubationszeit von 72 h | | | | | | | |
|---|---|---|---|---|---|---|---|
| MHK bei | | Gesamtkonzentration MIT/BIT +OIT | Konzentration | | $Q_a/Q_A$ | $Q_b/Q_B$ | Synergie-index |
| MIT/BIT Konzentration $Q_a$ (ppm) | OIT Konzentration $Q_b$ (ppm) | $Q_a + Q_b$ (ppm) | MIT/BIT (Gew%) | OIT (Gew%) | | | $Q_a/Q_A + Q_b/Q_B$ |
| 0 | 5 | 5 | 0,0 | 100,0 | 0,00 | 1,00 | 1,00 |
| 30 | 2,5 | 32,5 | 92,3 | 7,7 | 0,30 | 0,50 | 0,80 |
| 40 | 2,5 | 42,5 | 94,1 | 5,9 | 0,40 | 0,50 | 0,90 |
| 60 | 1 | 61 | 98,4 | 1,6 | 0,60 | 0,20 | 0,80 |
| 80 | 0,5 | 80,5 | 99,4 | 0,6 | 0,80 | 0,10 | 0,90 |
| 100 | 0 | 100 | 100,0 | 0,0 | 1,00 | 0,00 | 1,00 |

Beispiel 16

Ähnlich wie im Beispiel 1 wird der Synergismus eines Wirkstoffgemisches, das außer MIT und BIT noch zusätzlich OIT enthält, gegenüber dem Mikroorganismus Penicillium funiculosum aufgezeigt.

Die Versuchsansätze enthielten eine Sabouraud-Maltose-Bouillon als Nährmedium. Die Sporenkonzentration lag bei $10^6$ pro ml. Die Inkubationszeit betrug 72 h bei 25°C. Jede Probe wurde mit 120 U/min auf einem Inkubationsschüttler bebrütet.

Aus der nachfolgenden Tabelle XXIII sind die MHK-Werte der geprüften Biozidzusammensetzungen ersichtlich. Der MHK-Wert beim Einsatz von MIT/BIT allein betrug 50 ppm und beim Einsatz von OIT allein 5 ppm.

Tabelle XXIII

| MHK-Werte bezüglich Penicillium funiculosum bei einer Inkubationszeit von 72 h | | | | | | |
|---|---|---|---|---|---|---|
| Konz. MIT/BIT (ppm) | Konzentration OIT (ppm) | | | | | |
| | 5 | 2,5 | 1 | 0,5 | 0,25 | 0 |
| 75 | - | - | - | - | - | - |
| 50 | - | - | - | - | - | - |
| 25 | - | - | - | - | - | + |

Tabelle XXIII   (fortgesetzt)

| MHK-Werte bezüglich Penicillium funiculosum bei einer Inkubationszeit von 72 h | | | | | | |
|---|---|---|---|---|---|---|
| Konz. MIT/BIT (ppm) | Konzentration OIT (ppm) | | | | | |
| | 5 | 2,5 | 1 | 0,5 | 0,25 | 0 |
| 15 | - | - | - | + | + | + |
| 10 | - | - | + | + | + | + |
| 5 | - | - | + | + | + | + |
| 0 | - | + | + | + | + | + |

Beim Einsatz des vorgenannten Gemisches aus MIT und BIT sowie einem Zusatz an OIT trat ein Synergismus ein. Die Berechnung des Synergieindex ergibt sich aus der Tabelle XXIV. Hiernach lag bei Penicillium funiculosum der niedrigste Synergieindex (0,50) bei einem Gemisch aus einerseits 93,8 Gew% MIT/BIT und andererseits 6,2 Gew% OIT.

Tabelle XXIV

| Berechnung des Synergieindex bezüglich Penicillium funiculosum bei einer Inkubationszeit von 72 h | | | | | | | |
|---|---|---|---|---|---|---|---|
| MHK bei | | Gesamtkonzentration MIT/BIT +OIT | Konzentration | | $Q_a/Q_A$ | $Q_b/Q_B$ | Synergie-index |
| MIT/BIT Konzentration $Q_a$ (ppm) | OIT Konzentration $Q_b$ (ppm) | $Q_a + Q_b$ (ppm) | MIT/BIT (Gew%) | OIT (Gew%) | | | $Q_a/ Q_A + Q_b/ Q_B$ |
| 0 | 5 | 5 | 0,0 | 100,0 | 0,00 | 1,00 | 1,00 |
| 5 | 2,5 | 7,5 | 66,7 | 33,3 | 0,10 | 0,50 | 0,60 |
| 10 | 2,5 | 12,5 | 80,0 | 20,0 | 0,20 | 0,50 | 0,70 |
| 15 | 2,5 | 17,5 | 85,7 | 14,3 | 0,30 | 0,50 | 0,80 |
| 15 | 1 | 16 | 93,8 | 6,2 | 0,30 | 0,20 | 0,50 |
| 25 | 1 | 26 | 96,2 | 3,8 | 0,50 | 0,20 | 0,70 |
| 25 | 0,5 | 25,5 | 98,0 | 2,0 | 0,50 | 0,10 | 0,60 |
| 25 | 0,25 | 25,25 | 99,0 | 1,0 | 0,50 | 0,05 | 0,55 |
| 50 | 0 | 50 | 100,0 | 0,0 | 1,00 | 0,00 | 1,00 |

Beispiel 17

Ähnlich wie im Beispiel 1 wird der Synergismus eines Wirkstoffgemisches, das außer MIT und BIT noch zusätzlich OIT enthält, gegenüber dem Mikroorganismus Saccharomyces cerevisiae aufgezeigt.

Die Versuchsansätze enthielten eine Sabouraud-Maltose-Bouillon als Nährmedium. Die Zelldichte lag bei $10^6$ Keime/ml. Die Inkubationszeit betrug 72 h bei 25°C. Jede Probe wurde mit 120 U/min auf einem Inkubationsschüttler bebrütet.

Aus der nachfolgenden Tabelle XXV sind die MHK-Werte der geprüften Biozidzusammensetzungen ersichtlich. Der MHK-Wert beim Einsatz von MIT/BIT allein betrug 40 ppm und beim Einsatz von OIT allein 5 ppm.

Tabelle XXV

| MHK-Werte bezüglich Saccharomyces cerevisiae bei einer Inkubationszeit von 72 h | | | | | | | | | | | |
|---|---|---|---|---|---|---|---|---|---|---|---|
| Konz. MIT/BIT (ppm) | Konzentration OIT (ppm) | | | | | | | | | | |
| | 20 | 15 | 12,5 | 10 | 7,5 | 5 | 2,5 | 1 | 0,5 | 0,25 | 0 |
| 100 | - | - | - | - | - | - | - | - | - | - | - |
| 80 | - | - | - | - | - | - | - | - | - | - | - |
| 70 | - | - | - | - | - | - | - | - | - | - | - |
| 60 | - | - | - | - | - | - | - | - | - | - | - |
| 50 | - | - | - | - | - | - | - | - | - | - | - |

Tabelle XXV   (fortgesetzt)

| MHK-Werte bezüglich Saccharomyces cerevisiae bei einer Inkubationszeit von 72 h | | | | | | | | | | | |
|---|---|---|---|---|---|---|---|---|---|---|---|
| Konz. MIT/BIT (ppm) | Konzentration OIT (ppm) | | | | | | | | | | |
| | 20 | 15 | 12,5 | 10 | 7,5 | 5 | 2,5 | 1 | 0,5 | 0,25 | 0 |
| 40 | - | - | - | - | - | - | - | - | - | - | - |
| 30 | - | - | - | - | - | - | - | - | - | - | + |
| 20 | - | - | - | - | - | - | - | + | + | + | + |
| 15 | - | - | - | - | - | - | + | + | + | + | + |
| 10 | - | - | - | - | - | - | + | + | + | + | + |
| 5 | - | - | - | - | - | - | + | + | + | + | + |
| 0 | - | - | - | - | - | - | + | + | + | + | + |

Beim Einsatz des vorgenannten Gemisches aus MIT und BIT sowie. einem Zusatz an OIT trat ein Synergismus ein. Die Berechnung des Synergieindex ergibt sich aus der Tabelle XXVI. Hiernach lag bei Saccharomyces cerevisiae der niedrigste Synergieindex (0,80) bei einem Gemisch aus einerseits 99,2 Gew% MIT/BIT und andererseits 0,8 Gew% OIT.

Tabelle XXVI

| Berechnung des Synergieindex bezüglich Saccharomyces cerevisiae bei einer Inkubationszeit von 72 h | | | | | | | |
|---|---|---|---|---|---|---|---|
| MHK bei | | Gesamtkonzentration MIT/BIT +OIT | Konzentration | | $Q_a/Q_A$ | $Q_b/Q_B$ | Synergie-index |
| MIT/BIT Konzentration $Q_a$ (ppm) | OIT Konzentration $Q_b$ (ppm) | $Q_a + Q_b$ (ppm) | MIT/BIT (Gew%) | OIT (Gew%) | | | $Q_a/Q_A + Q_b/Q_B$ |
| 0 | 5 | 5 | 0,0 | 100,0 | 0,00 | 1,00 | 1,00 |
| 30 | 1 | 31 | 96,8 | 3,2 | 0,75 | 0,20 | 0,95 |
| 30 | 0,5 | 30,5 | 98,4 | 1,6 | 0,75 | 0,10 | 0,85 |
| 30 | 0,25 | 30,25 | 99,2 | 0,8 | 0,75 | 0,05 | 0,80 |
| 40 | 0 | 40 | 100,0 | 0,0 | 1,00 | 0,00 | 1,00 |

Beispiel 18

Ähnlich wie im Beispiel 1 wird der Synergismus eines Wirkstoffgemisches, das außer MIT und BIT noch zusätzlich OIT enthält, gegenüber dem Mikroorganismus Pseudomonas aeruginosa aufgezeigt.

Die Versuchsansätze enthielten eine Müller-Hinton-Bouillon als Nährmedium. Die Zelldichte lag bei $10^6$ Keime/ml. Die Inkubationszeit betrug 144 h bei 25°C. Jede Probe wurde mit 120 U/min auf einem Inkubationsschüttler bebrütet.

Aus der nachfolgenden Tabelle XXVII sind die MHK-Werte der geprüften Biozidzusammensetzungen ersichtlich. Der MHK-Wert beim Einsatz von MIT/BIT allein betrug 30 ppm und beim Einsatz von OIT allein lag er über 800 ppm.

## Tabelle XXVII

MHK-Werte bezüglich Pseudomonas aeruginosa bei einer Inkubationszeit von 144 h

| Konzentration OIT (ppm) | Konz. MIT/BIT (ppm) 75 | 50 | 40 | 30 | 20 | 15 | 10 | 5 | 0 |
|---|---|---|---|---|---|---|---|---|---|
| 0 | – | – | – | – | + | + | + | + | + |
| 5 | – | – | – | – | + | + | + | + | + |
| 7,5 | – | – | – | – | + | + | + | + | + |
| 10 | – | – | – | – | + | + | + | + | + |
| 25 | – | – | – | – | – | + | + | + | + |
| 50 | – | – | – | – | – | + | + | + | + |
| 75 | – | – | – | – | – | + | + | + | + |
| 100 | – | – | – | – | – | + | + | + | + |
| 200 | – | – | – | – | – | – | + | + | + |
| 300 | – | – | – | – | – | – | + | + | + |
| 400 | – | – | – | – | – | – | – | + | + |
| 500 | – | – | – | – | – | – | – | + | + |
| 600 | – | – | – | – | – | – | – | + | + |
| 700 | – | – | – | – | – | – | – | – | + |
| 800 | – | – | – | – | – | – | – | – | + |

Beim Einsatz des vorgenannten Gemisches aus MIT und BIT sowie einem Zusatz an OIT trat ein Synergismus ein. Die Berechnung des Synergieindex ergibt sich aus der Tabelle XXVIII. Hiernach lag bei Pseudomonas aeruginosa der niedrigste Synergieindex (0,53) bei einem Gemisch aus einerseits 44,4 Gew% MIT/BIT und andererseits 55,6 Gew% OIT.

Tabelle XXVIII

| Berechnung des Synergieindex bezüglich Pseudomonas aeruginosa bei einer Inkubationszeit von 144 h | | | | | | | |
|---|---|---|---|---|---|---|---|
| MHK bei | | Gesamtkonzentration MIT/BIT +OIT | Konzentration | | $Q_a/Q_A$ | $Q_b/Q_B$ | Synergie-index |
| MIT/BIT Konzentration $Q_a$ (ppm) | OIT Konzentration $Q_b$ (ppm) | $Q_a + Q_b$ (ppm) | MIT/BIT (Gew%) | OIT (Gew%) | | | $Q_a/Q_A+Q_b/Q_B$ |
| 0 | 900 | 900 | 0,0 | 100,0 | 0,00 | 1,00 | 1,00 |
| 5 | 700 | 705 | 0,7 | 99,3 | 0,13 | 0,78 | 0,90 |
| 10 | 600 | 610 | 1,6 | 98,4 | 0,25 | 0,67 | 0,92 |
| 10 | 500 | 510 | 2,0 | 98,0 | 0,25 | 0,56 | 0,81 |
| 10 | 400 | 410 | 2,4 | 97,6 | 0,25 | 0,44 | 0,69 |
| 15 | 300 | 315 | 4,8 | 95,2 | 0,38 | 0,33 | 0,71 |
| 15 | 200 | 215 | 7,0 | 93,0 | 0,38 | 0,22 | 0,60 |
| 20 | 100 | 120 | 16,7 | 83,3 | 0,50 | 0,11 | 0,61 |
| 20 | 75 | 95 | 21,1 | 78,9 | 0,50 | 0,08 | 0,58 |
| 20 | 50 | 70 | 28,6 | 71,4 | 0,50 | 0,06 | 0,56 |
| 20 | 25 | 45 | 44,4 | 55,6 | 0,50 | 0,03 | 0,53 |
| 40 | 0 | 40 | 100,0 | 0,0 | 1,00 | 0,00 | 1,00 |

Beispiel 19

Ähnlich wie im Beispiel 1 wird der Synergismus eines Wirkstoffgemisches, das außer MIT und BIT noch zusätzlich Formaldehyd (HCHO) enthält, gegenüber dem Mikroorganismus Escherichia coli aufgezeigt.

Die Versuchsansätze enthielten eine Müller-Hinton-Bouillon als Nährmedium. Die Zelldichte lag bei $10^6$ Keime/ml. Die Inkubationszeit betrug 48 h bei 25°C. Jede Probe wurde mit 120 U/min auf einem Inkubationsschüttler bebrütet.

Aus der nachfolgenden Tabelle XXIX sind die MHK-Werte der geprüften Biozidzusammensetzungen ersichtlich. Der MHK-Wert beim Einsatz von MIT/BIT allein betrug 25 ppm und beim Einsatz von HCHO allein 300 ppm.

23

Tabelle XXIX

MHK-Werte bezüglich Escherichia coli bei einer Inkubationszeit von 48 h

| Konz. MIT/BIT (ppm) | Konzentration HCHO (ppm) | | | | | | | | | | | |
|---|---|---|---|---|---|---|---|---|---|---|---|---|
| | 0 | 50 | 100 | 200 | 300 | 400 | 500 | 600 | 700 | 800 | 900 | 1000 |
| 45 | − | − | − | − | − | − | − | − | − | − | − | − |
| 40 | − | − | − | − | − | − | − | − | − | − | − | − |
| 35 | − | − | − | − | − | − | − | − | − | − | − | − |
| 30 | − | − | − | − | − | − | − | − | − | − | − | − |
| 25 | − | − | − | − | − | − | − | − | − | − | − | − |
| 20 | + | − | − | − | − | − | − | − | − | − | − | − |
| 15 | + | − | − | − | − | − | − | − | − | − | − | − |
| 12,5 | + | + | − | − | − | − | − | − | − | − | − | − |
| 10 | + | + | + | − | − | − | − | − | − | − | − | − |
| 7,5 | + | + | + | − | − | − | − | − | − | − | − | − |
| 5 | + | + | + | + | − | − | − | − | − | − | − | − |
| 0 | + | + | + | + | − | − | − | − | − | − | − | − |

Beim Einsatz des vorgenannten Gemisches aus MIT und BIT sowie eines Zusatzes an HCHO trat ein Synergismus ein. Die Berechnung des Synergieindex ergibt sich aus der Tabelle XXX. Hiernach lag bei Escherichia coli der niedrigste Synergieindex (0,77) bei einem Gemisch aus einerseits 23,1 Gew% MIT/BIT und andererseits 76,9 Gew% HCHO.

Tabelle XXX

| Berechnung des Synergieindex bezüglich Escherichia coli bei einer Inkubationszeit von 48 h | | | | | | | |
|---|---|---|---|---|---|---|---|
| MHK bei | | Gesamtkonzen MIT/BIT tration +HCHO | Konzentration | | $Q_a/Q_A$ | $Q_b/Q_B$ | Synergie-index |
| MIT/BIT Konzentration $Q_a$ (ppm) | HCHO Konzentration $Q_b$ (ppm) | $Q_a + Q_b$ (ppm) | MIT/BIT (Gew%) | HCHO (Gew%) | | | $Q_a/Q_A+Q_b/Q_B$ |
| 0 | 300 | 300 | 0,0 | 100,0 | 0,00 | 1,00 | 1,00 |
| 7,5 | 200 | 207,5 | 3,6 | 96,4 | 0,30 | 0,67 | 0,97 |
| 12,5 | 100 | 112,5 | 11,1 | 88,9 | 0,50 | 0,33 | 0,83 |
| 15 | 50 | 65 | 23,1 | 76,9 | 0,60 | 0,17 | 0,77 |
| 25 | 0 | 25 | 100,0 | 0,0 | 1,00 | 0,00 | 1,00 |

Beispiel 20

Ähnlich wie im Beispiel 1 wird der Synergismus eines Wirkstoffgemisches, das außer MIT und BIT noch zusätzlich HCHO enthält, gegenüber dem Mikroorganismus Pseudomonas aeruginosa aufgezeigt.

Die Versuchsansätze enthielten eine Müller-Hinton-Bouillon als Nährmedium. Die Zelldichte lag bei $10^6$ Keime/ml. Die Inkubationszeit betrug 48 h bei 25°C. Jede Probe wurde mit 120 U/min auf einem Inkubationsschüttler bebrütet.

Aus der nachfolgenden Tabelle XXXI sind die MHK-Werte der geprüften Biozidzusammensetzungen ersichtlich. Der MHK-Wert beim Einsatz von MIT/BIT allein betrug 30 ppm und beim Einsatz von HCHO allein 300 ppm.

Tabelle XXXI

| MHK-Werte bezüglich Pseudomonas aeruginosa bei einer Inkubationszeit von 48 h | | | | | | | | | | | | |
|---|---|---|---|---|---|---|---|---|---|---|---|---|
| Konz. MIT/BIT (ppm) | Konzentration HCHO (ppm) | | | | | | | | | | | |
| | 1000 | 900 | 800 | 700 | 600 | 500 | 400 | 300 | 200 | 100 | 50 | 0 |
| 45 | - | - | - | - | - | - | - | - | - | - | - | - |
| 40 | - | - | - | - | - | - | - | - | - | - | - | - |
| 35 | - | - | - | - | - | - | - | - | - | - | - | - |
| 30 | - | - | - | - | - | - | - | - | - | - | - | - |
| 25 | - | - | - | - | - | - | - | - | - | - | - | + |
| 20 | - | - | - | - | - | - | - | - | - | - | - | + |
| 15 | - | - | - | - | - | - | - | - | - | - | + | + |
| 12,5 | - | - | - | - | - | - | - | - | - | - | + | + |
| 10 | - | - | - | - | - | - | - | - | - | + | + | + |
| 7,5 | - | - | - | - | - | - | - | - | - | + | + | + |
| 5 | - | - | - | - | - | - | - | - | + | + | + | + |
| 0 | - | - | - | - | - | - | - | - | + | + | + | + |

Beim Einsatz des vorgenannten Gemisches aus MIT und BIT sowie eines Zusatzes an HCHO trat ein Synergismus ein. Die Berechnung des Synergieindex ergibt sich aus der Tabelle XXXII. Hiernach lag bei Pseudomonas aeruginosa der niedrigste Synergieindex (0,75) bei einem Gemisch aus einerseits 11,1 Gew% MIT/BIT und andererseits 88,9 Gew% HCHO.

Tabelle XXXII

| Berechnung des Synergieindex bezüglich Pseudomonas aeruginosa bei einer Inkubationszeit von 48 h | | | | | | | |
|---|---|---|---|---|---|---|---|
| MHK bei | | Gesamtkonzentration MIT/BIT +HCHO | Konzentration | | $Q_a/Q_A$ | $Q_b/Q_B$ | Synergie-index |
| MIT/BIT Konzentration $Q_a$ (ppm) | HCHO Konzentration $Q_b$ (ppm) | $Q_a + Q_b$ (ppm) | MIT/BIT (Gew%) | HCHO (Gew%) | | | $Q_a/Q_A+Q_b/Q_B$ |
| 0 | 300 | 300 | 0,0 | 100,0 | 0,00 | 1,00 | 1,00 |
| 7,5 | 200 | 207,5 | 3,6 | 96,4 | 0,25 | 0,67 | 0,92 |
| 12,5 | 100 | 112,5 | 11,1 | 88,9 | 0,42 | 0,33 | 0,75 |
| 15 | 100 | 115 | 13,0 | 87,0 | 0,50 | 0,33 | 0,83 |
| 20 | 50 | 70 | 28,6 | 71,4 | 0,67 | 0,17 | 0,83 |
| 30 | 0 | 30 | 100,0 | 0,0 | 1,00 | 0,00 | 1,00 |

Beispiel 21

Ähnlich wie im Beispiel 1 wird der Synergismus eines Wirkstoffgemisches, das außer MIT und BIT noch zusätzlich 2-Brom-2-nitropropan-1,3-diol (BNPD) enthält, gegenüber dem Mikroorganismus Penicillium funiculosum aufgezeigt.

Die Versuchsansätze enthielten eine Sabouraud-Maltose-Bouillon als Nährmedium. Die Sporenkonzentration lag bei $10^6$ pro ml. Die Inkubationszeit betrug 72 h bei 25°C. Jede Probe wurde mit 120 U/min auf einem Inkubationsschüttler bebrütet.

Aus der nachfolgenden Tabelle XXXIII sind die MHK-Werte der geprüften Biozidzusammensetzungen ersichtlich. Der MHK-Wert beim Einsatz von MIT/BIT allein betrug 25 ppm und beim Einsatz von BNPD allein 600 ppm.

Tabelle XXXIII

| MHK-Werfce bezüglich Penicillium funiculosum bei einer Inkubationszeit von 72 h | | | | | | | | | | | |
|---|---|---|---|---|---|---|---|---|---|---|---|
| Konz. MIT/BIT (ppm) | Konzentration BNPD (ppm) | | | | | | | | | | |
| | 1000 | 800 | 600 | 400 | 300 | 200 | 150 | 100 | 50 | 25 | 0 |
| 50 | - | - | - | - | - | - | - | - | - | - | - |
| 45 | - | - | - | - | - | - | - | - | - | - | - |
| 40 | - | - | - | - | - | - | - | - | - | - | - |
| 35 | - | - | - | - | - | - | - | - | - | - | - |
| 30 | - | - | - | - | - | - | - | - | - | - | - |
| 25 | - | - | - | - | - | - | - | - | - | - | - |
| 20 | - | - | - | - | - | - | - | - | - | - | + |
| 15 | - | - | - | - | - | - | - | - | - | + | + |
| 12,5 | - | - | - | - | - | - | - | - | + | + | + |
| 10 | - | - | - | - | - | - | + | + | + | + | + |
| 7,5 | - | - | - | - | - | + | + | + | + | + | + |
| 0 | - | - | - | + | + | + | + | + | + | + | + |

Beim Einsatz des vorgenannten Gemisches aus MIT und BIT sowie eines Zusatzes an BNPD trat ein Synergismus ein. Die Berechnung des Synergieindex ergibt sich aus der Tabelle XXXIV. Hiernach lag bei Penicillium funiculosum der niedrigste Synergieindex (0,67) bei einem Gemisch aus einerseits 11,1 Gew% MIT/BIT und andererseits 88,9 Gew% BNPD.

Tabelle XXXIV

| Berechnung des Synergieindex bezüglich Penicillium funiculosum bei einer Inkubationszeit von 72 h | | | | | | | |
|---|---|---|---|---|---|---|---|
| MHK bei | | Gesamtkonzentration MIT/BIT +BNPD | Konzentration | | $Q_a/Q_A$ | $Q_b/Q_B$ | Synergie-index |
| MIT/BIT Konzentration $Q_a$ (ppm) | BNPD Konzentration $Q_b$ (ppm) | $Q_a + Q_b$ (ppm) | MIT/BIT (Gew%) | BNPD (Gew%) | | | $Q_a/Q_A+Q_b/Q_B$ |
| 25 | 0 | 25 | 100 | 0,0 | 1,00 | 0,00 | 1,00 |
| 20 | 25 | 45 | 44,4 | 55,6 | 0,80 | 0,04 | 0,84 |
| 20 | 50 | 70 | 28,6 | 71,4 | 0,80 | 0,08 | 0,88 |
| 15 | 50 | 65 | 23,1 | 76,9 | 0,60 | 0,08 | 0,68 |
| 15 | 100 | 115 | 13,0 | 87,0 | 0,60 | 0,17 | 0,77 |
| 12,5 | 100 | 112,5 | 11,1 | 88,9 | 0,50 | 0,17 | 0,67 |
| 12,5 | 150 | 162,5 | 7,7 | 92,3 | 0,50 | 0,25 | 0,75 |
| 12,5 | 200 | 212,5 | 5,9 | 94,1 | 0,50 | 0,33 | 0,83 |
| 10 | 200 | 210 | 4,8 | 95,2 | 0,40 | 0,33 | 0,73 |
| 7,5 | 300 | 307,5 | 2,4 | 97,6 | 0,30 | 0,50 | 0,80 |
| 7,5 | 400 | 407,5 | 1,8 | 98,2 | 0,30 | 0,67 | 0,97 |
| 0 | 600 | 600 | 0,0 | 100,0 | 0,00 | 1,00 | 1,00 |

**Patentansprüche**

1. Biozidzusammensetzung als Zusatz zu Stoffen, die von schädlichen Mikroorganismen befallen werden können, wobei die Biozidzusammensetzung mindestens zwei biozide Wirkstoffe aufweist, von denen einer 2-Methylisothiazolin-3-on ist, **dadurch gekennzeichnet, daß** die Biozidzusammensetzung als weiteren bioziden Wirkstoff 1,2-Benzisothiazolin-3-on enthält, ausgenommen Biozidzusammensetzungen mit einem Gehalt an 5-Chlor-2-methylisothiazolin-3-on.

2. Biozidzusammensetzung nach Anspruch 1, **dadurch gekennzeichnet, daß** sie 2-Methylisothiazolin-3-on und 1,2-Benzisothiazolin-3-on im Gewichtsverhältnis von (50-1):(1-50) enthält.

3. Biozidzusammensetzung nach Anspruch 2, **dadurch gekennzeichnet, daß** sie 2-Methylisothiazolin-3-on und 1,2-Benzisothiazolin-3-on im Gewichtsverhältnis von (15-1) : (1-8) enthält.

4. Biozidzusammensetzung nach einem der Ansprüche 1 bis 3, **dadurch gekennzeichnet, daß** sie 2-Methylisothiazolin-3-on und 1,2-Benzisothiazolin-3-on in einer Gesamtkonzentration von 1 bis 20 Gew%, bezogen auf die gesamte Biozidzusammensetzung, enthält.

5. Biozidzusammensetzung nach einem der Ansprüche 1 bis 4, **dadurch gekennzeichnet, daß** sie ein polares und/oder ein unpolares flüssiges Medium enthält.

6. Biozidzusammensetzung nach Anspruch 5, **dadurch gekennzeichnet, daß** sie als polares flüssiges Medium Wasser, einen aliphatischen Alkohol mit 1 bis 4 Kohlenstoffatomen, ein Glykol, einen Glykolether, einen Glykolester, ein Polyethylenglykol, ein Polypropylenglykol, N,N-Dimethylformamid oder ein Gemisch aus solchen Stoffen enthält.

7. Biozidzusammensetzung nach Anspruch 6, **dadurch gekennzeichnet, daß** das polare flüssige Medium Wasser ist und die Zusammensetzung einen pH-Wert von 7 bis 9 aufweist.

8. Biozidzusammensetzung nach Anspruch 5, **dadurch gekennzeichnet, daß** sie als unpolares flüssiges Medium Xylol und/oder Toluol enthält.

9. Biozidzusammensetzung nach einem der Ansprüche 1 bis 8, **dadurch gekennzeichnet, daß** sie zusätzlich 3-Iod-

**EP 1 005 271 B1**

2-propinyl-N-butylcarbamat als bioziden Wirkstoff enthält.

**10.** Biozidzusammensetzung nach Anspruch 9, **dadurch gekennzeichnet, daß** das Gewichtsverhältnis der Kombination aus 2-Methylisothiazolin-3-on und 1,2-Benzisothiazolin-3-on einerseits und 3-Iod-2-propinyl-N-butylcarbamat andererseits im Bereich von 1:10 bis 100:1 liegt.

**11.** Biozidzusammensetzung nach einem der Ansprüche 1 bis 10, **dadurch gekennzeichnet, daß** sie zusätzlich 2-n-Octylisothiazolin-3-on als bioziden Wirkstoff enthält.

**12.** Biozidzusammensetzung nach Anspruch 11, **dadurch gekennzeichnet, daß** das Gewichtsverhältnis der Kombination aus 2-Methylisothiazolin-3-on und 1,2-Benzisothiazolin-3-on einerseits und 2-n-Octylisothiazolin-3-on andererseits im Bereich von 1:10 bis 100:1 liegt.

**13.** Biozidzusammensetzung nach einem der Ansprüche 1 bis 12, **dadurch gekennzeichnet, daß** sie zusätzlich Formaldehyd oder einen Formaldehyd-Depotstoff als bioziden Wirkstoff enthält.

**14.** Biozidzusammensetzung nach Anspruch 13, **dadurch gekennzeichnet, daß** das Gewichtsverhältnis der Kombination aus 2-Methylisothiazolin-3-on und 1,2-Benzisothiazolin-3-on einerseits und dem Formaldehyd oder dem Formaldehyd-Depotstoff andererseits im Bereich von 1:100 bis 10:1 liegt.

**15.** Biozidzusammensetzung nach einem der Ansprüche 1 bis 14, **dadurch gekennzeichnet, daß** sie zusätzlich 2-Brom-2-nitropropan-1,3-diol als bioziden Wirkstoff enthält.

**16.** Biozidzusammensetzung nach Anspruch 15, **dadurch gekennzeichnet, daß** das Gewichtsverhältnis der Kombination aus 2-Methylisothiazolin-3-on und 1,2-Benzisothiazolin-3-on einerseits und dem 2-Brom-2-nitropropan-1,3-diol andererseits im Bereich von 1:10 bis 10:1 liegt.

**17.** Biozidzusammensetzung nach einem der Ansprüche 9 bis 16, **dadurch gekennzeichnet, daß** sie das 2-Methylisothiazolin-3-on und das 1,2-Benzisothiazolin-3-on im Gewichtsverhältnis 1:1 enthält.

**18.** Verwendung einer Biozidzusammensetzung nach einem der Ansprüche 1 bis 17 zur Bekämpfung von schädlichen Mikroorganismen.

**Claims**

**1.** Biocide composition as an additive to materials which can attacked, by harmful micro-organisms, wherein the biocide composition contains at least two biocidal active agents, of which one is a 2-methylisothiazolin-3-one, **characterised in that** the biocide composition contains a further biocidal active substance 1,2-benzisothiazolin-3-one with the exception of biocide compositions with a content of 5-chloro-2-methylisothiazolin-3-one.

**2.** Biocide composition according to Claim 1, **characterised in that** it contains 2-methylisothiazolin-3-one and 1,2-benzisothiazolin-3-one in a weight ratio of (50-1) : (1-50).

**3.** Biocide composition according to Claim 2, **characterised in that** it contains 2-methylisothiazolin-3-one and 1,2-benzisothiazolin-3-one in the weight ratio of (50-1) : (1-8).

**4.** Biocide composition according to one of Claims 1 to 3, **characterised in that** it contains 2-methylisothiazolin-3-one and 1,2-benzisothiazolin-3-one in a total concentration of 1 to 20 wt %, taken on the entire biocide composition.

**5.** Biocide composition according to one of Claims 1 to 4, **characterised in that** it contains a polar and/or a non-polar liquid medium.

**6.** Biocide composition according to Claim 5, **characterised in that** it contains as polar liquid medium water, an aliphatic alcohol with 1 to 4 carbon atoms, a glycol, a glycol ether, a glycol ester, polyethylene glycol, polypropylene glycol, N,N-dimethylformamide or a mixture of such materials.

**7.** Biocide composition according to Claim 6, **characterised in that** the polar liquid medium is water, and the composition has a pH value of 7 to 9.

**8.** Biocide composition according to Claim 5, **characterised in that** it contains as non-polar liquid medium xylene and/or toluene.

**9.** Biocide composition according to one of Claims 1 to 8, **characterised in that** it additionally contains 3-iodo-2-propinyl-N-butylcarbamate as biocidal active agent.

**10.** Biocide composition according to Claim 9, **characterised in that** the weight ratio of the combination of 2-methylisothiazolin-3-one and 1,2-benzisothiazolin-3-one, on the one hand, and 3-iodo-2-propinyl-N-butylcarbamate on the other hand, lies in the range of 1:10 to 100:1.

**11.** Biocide composition according to one of Claims 1 to 10, **characterised in that** it additionally contains 2-n-octylisothiazolin-3-one as biocidal active substance.

**12.** Biocide composition according to Claim 11, **characterised in that** the weight ratio of the combination of 2-methylisothiazolin-3-one and 1,2-benzisothiazolin-3-one, on the one hand, and 2-n-octylisothiazolin-3-one on the other hand lies in the range of 1:10 to 100:1.

**13.** Biocide composition according to one of Claims 1 to 12, **characterised in that** it additionally contains formaldehyde or a formaldehyde generating material as biocidal active agent.

**14.** Biocide composition according to Claim 13, **characterised in that** the weight ratio of the combination of 2-methylisothiazolin-3-one and 1,2-benzisothiazolin-3-one, on the one hand, and the formaldehyde or formaldehyde-generating material, on the other, lies in the range of 1:100 to 10:1.

**15.** Biocide composition according to one of Claims 1 to 14, **characterised in that** it additionally contains 2-bromo-2-nitropropane-1-3-diol as biocidal agent.

**16.** Biocide composition according to Claim 15, **characterised in that** the weight ratio of the combination of 2-methylisothiazolin-3-one and 1,2-benzisothiazolin-3-one, on the one hand, and the 2-bromo-2-nitropropane-1-3-diol, on the other, lies in the range of 1:10 to 10:1.

**17.** Biocide composition according to one of Claims 9 to 16, **characterised in that** it contains 2-methylisothiazolin-3-one and 1,2-benzisothiazolin-3-one in the weight ratio of 1:1.

**18.** The use of a biocide composition according to one of Claims 1 to 17, for combatting harmful micro-organisms.

**Revendications**

**1.** Composition biocide en tant qu'additif de substances, que peuvent infester des micro-organismes nuisibles, où la composition biocide présente au moins deux substances actives biocides, dont l'une est la 2-méthylisothiazolin-3-one, **caractérisée en ce que** la composition biocide contient comme autre substance active biocide la 1,2-benzisothiazolin-3-one, exception faite des compositions biocides avec une teneur en 5-chloro-2-méthylisothiazolin-3-one.

**2.** Composition biocide selon la revendication 1, **caractérisée en ce qu'**elle contient la 2-méthylisothiazolin-3-one et la 1,2-benzisothiazolin-3-one en proportion en poids de (50-1): (1-50).

**3.** Composition biocide selon la revendication 2, **caractérisée en ce qu'**elle contient la 2-méthylisothiazolin-3-one et la 1,2-benzisothiazolin-3-one en proportion en poids de (15-1):(1-8).

**4.** Composition biocide selon l'une des revendications 1 à 3, **caractérisée en ce qu'**elle contient la 2-méthylisothiazolin-3-one et la 1,2-benzisothiazolin-3-one dans une concentration totale de 1 à 20 % en poids par rapport à la composition biocide totale.

**5.** Composition biocide selon l'une des revendications 1 à 4, **caractérisée en ce qu'**elle contient un milieu liquide polaire et/ou un milieu liquide non polaire.

**6.** Composition biocide selon la revendication 5, **caractérisée en ce qu'**elle contient en tant que milieu polaire liquide l'eau, un alcool aliphatique présentant 1 à 4 atomes de carbone, un glycol, un éther de glycol, un ester de glycol, un polyéthylèneglycol, un polypropylèneglycol, le N,N-diméthylformamide ou un mélange de telles substances.

**7.** Composition biocide selon la revendication 6, **caractérisée en ce que** le milieu polaire liquide est l'eau et la composition montre une valeur du pH de 7 à 9.

**8.** Composition biocide selon la revendication 5, **caractérisée en ce qu'**elle contient en tant que milieu non polaire liquide le xylène et/ou le toluène.

**9.** Composition biocide selon l'une des revendications 1 à 8, **caractérisée en ce qu'**elle contient de plus le N-butylcarbamate de 3-iodo-2-propynyle en tant que substance active biocide.

**10.** Composition biocide selon la revendication 9, **caractérisée en ce que** la proportion en poids de la combinaison de 2-méthylisothiazolin-3-one et de 1,2-benzisothiazolin-3-one d'une part et de N-butylcarbamate de 3-iodo-2-propynyle d'autre part se situe dans l'intervalle de 1:10 à 100:1.

**11.** Composition biocide selon l'une des revendications 1 à 10, **caractérisée en ce qu'**elle contient de plus la 2-n-octylisothiazolin-3-one en tant que substance active biocide.

**12.** Composition biocide selon la revendication 11, **caractérisée en ce que** la proportion en poids de la combinaison de 2-méthylisothiazolin-3-one et de 1,2-benzisothiazolin-3-one d'une part et de 2-n-octylisothiazolin-3-one d'autre part se situe dans l'intervalle de 1:10 à 100:1.

**13.** Composition biocide selon l'une des revendications 1 à 12, **caractérisée en ce qu'**elle contient de plus du formaldéhyde ou une substance de dépôt du formaldéhyde en tant que substance active biocide.

**14.** Composition biocide selon la revendication 13, **caractérisée en ce que** la proportion en poids de la combinaison de 2-méthylisothiazolin-3-one et de 1,2-benzisothiazolin-3-one d'une part et du formaldéhyde ou de la substance de dépôt du formaldéhyde d'autre part se situe dans l'intervalle de 1:100 à 10:1.

**15.** Composition biocide selon l'une des revendications 1 à 14, **caractérisée en ce qu'**elle contient de plus du 2-bromo-2-nitropropane-1,3-diol en tant que substance active biocide.

**16.** Composition biocide selon la revendication 15, **caractérisée en ce que** la proportion en poids de la combinaison de 2-méthylisothiazolin-3-one et de 1,2-benzisothiazolin-3-one d'une part et du 2-bromo-2-nitropropane-1,3-diol d'autre part se situe dans l'intervalle de 1:10 à 10:1.

**17.** Composition biocide selon l'une des revendications 9 à 16, **caractérisée en ce qu'**elle contient la 2-méthylisothiazolin-3-one et la 1,2-benzisothiazolin-3-one dans une proportion en poids de 1:1.

**18.** Utilisation d'une composition biocide selon l'une des revendications 1 à 17 pour la lutte contre les micro-organismes nuisibles.